(19) Europäisches Patentamt
European Patent Office
Office européen des brevets

(11) EP 3 354 688 B1

(12) EUROPEAN PATENT SPECIFICATION

(45) Date of publication and mention of the grant of the patent:
**13.03.2024 Bulletin 2024/11**

(21) Application number: **16848599.3**

(22) Date of filing: **20.09.2016**

(51) International Patent Classification (IPC):
***C08L 59/00*** *(2006.01)* ***C08G 2/00*** *(2006.01)*
***C08K 3/40*** *(2006.01)* ***C08K 9/00*** *(2006.01)*
***C08L 59/04*** *(2006.01)*

(52) Cooperative Patent Classification (CPC):
(C-Sets available)
**C08L 59/00; C08L 59/04; C08G 2/00; C08K 3/40; C08K 9/00** (Cont.)

(86) International application number:
**PCT/JP2016/077752**

(87) International publication number:
**WO 2017/051811 (30.03.2017 Gazette 2017/13)**

(54) **POLYACETAL RESIN COMPOSITION AND MOLDED BODY THEREOF**

POLYACETALHARZZUSAMMENSETZUNG UND FORMKÖRPER DARAUS

COMPOSITION DE RÉSINE DE POLYACÉTAL ET CORPS MOULÉ À BASE DE CETTE DERNIÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2015 JP 2015188910**

(43) Date of publication of application:
**01.08.2018 Bulletin 2018/31**

(73) Proprietor: **Asahi Kasei Kabushiki Kaisha**
**Tokyo 100-0006 (JP)**

(72) Inventors:
- **TAKAHASHI, Yosuke**
  **Tokyo 101-8101 (JP)**
- **SHIKANO, Yasukazu**
  **Tokyo 101-8101 (JP)**
- **MIYOSHI, Takaaki**
  **Tokyo 101-8101 (JP)**
- **SATOU, Kouji**
  **Tokyo 101-8101 (JP)**

(74) Representative: **Hoffmann Eitle**
**Patent- und Rechtsanwälte PartmbB**
**Arabellastraße 30**
**81925 München (DE)**

(56) References cited:
**WO-A1-01/32775**
**JP-A- H0 632 912**
**JP-A- S60 221 343**
**JP-A- 2002 519 466**
**JP-A- 2003 342 483**
**JP-A- 2006 037 267**
**JP-A- 2009 007 179**
**JP-A- 2009 096 881**
**JP-A- 2013 253 696**
**JP-B2- 4 060 831**
**JP-B2- 4 560 261**
**US-A1- 2002 016 395**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 354 688 B1

(52) Cooperative Patent Classification (CPC): (Cont.)

C-Sets
**C08L 59/04, C08K 7/28;**
**C08L 59/04, C08K 7/28, C08L 23/04;**
**C08L 59/04, C08K 9/08**

## Description

Technical Field

The present invention relates to a polyacetal resin composition and a molded article thereof.

Background Art

Polyacetal resins are excellent in balance among mechanical strength such as flexural modulus and tensile stress at break, chemical resistance, slidability, and abrasion resistance, and are easily processed. Therefore, such polyacetal resins are widely used as typical engineering plastics in mechanical elements for electrical equipment, automotive parts, and the like.

In particular, polyacetal resin compositions reinforced with inorganic fillers are used for automotive parts which are demanded to have durability. The "durability" means, for example, a long gear life under given stress, and is also referred to as "gear duration property".

Polyacetal resin compositions reinforced including inorganic fillers are increased in the molecular weight of polyacetal resins and/or controlled in the terminal groups of polyacetal resins, in order to enhance strength and durability.

Patent Literature 1 discloses a polyacetal resin composition including a polyacetal resin and a glass inorganic filler for the purpose of achieving excellent mechanical strength. Patent Literature 1 also discloses compounding of a modified polyacetal resin having 50 to 2000 mmol/kg of a hydroxyl group in a polyacetal resin molecule.

Patent Literature 2 discloses a composition comprising at least one polyoxymethylene having more than 15 mmol/kg of a terminal OH group, at least one coupling agent, at least one reinforcement fiber, and optionally at least one formaldehyde scavenger for the purposes of having excellent mechanical properties and achieving low formaldehyde emission.

Citation List

Patent Literatures

Patent Literature 1: Japanese Unexamined Patent Application Publication No. 2004-359791
Patent Literature 2: Japanese Unexamined Patent Application Publication (Translation of PCT Application) No. 2013-539810

Summary of Invention

Technical Problem

In recent years, mechanical elements, automotive parts and the like using polyacetal resins have been required to have much higher performance.

Specific examples of higher performance include enhanced mechanical strength, durability, and slidability.

Even with an increase in the number of terminal hydroxyl groups of polyacetal resins, desired durability has not yet been able to be achieved while an enhancement in affinity with inorganic fillers is achieved.

A problem to be solved by the present invention is to provide a resin composition having excellent durability, and a molded article thereof.

Solution to Problem

The present inventors have made intensive studies in order to solve the above problem. As a result, they have surprisingly found that the above problem can be solved by providing a resin composition comprising a polyacetal resin and a glass filler, wherein when a molded article of the resin composition is treated with a specified solvent, the ignition loss of the remaining residue is allowed to be 0.2% by weight or more, leading to completion of the present invention.

That is, the present invention is as defined in the claims.

Advantageous Effect of Invention

The present invention can provide a resin composition which allows a molded article having very excellent

durability to be provided.

Description of Embodiments

Hereinafter, a mode for carrying out the present invention (hereinafter, referred to as "embodiment".) will be described in detail. The following embodiments are illustrative for describing the present invention.

[Polyacetal resin composition]

A polyacetal resin composition of the present embodiment is a polyacetal resin composition comprising 100 parts by mass of a polyacetal resin (A) and 10 parts by mass or more and 100 parts by mass or less of a glass filler (B). wherein the polyacetal resin composition comprises at least one acid component as a sizing agent of the glass filler (B).

For the polyacetal resin composition of the present embodiment, when a polyacetal resin molded article (C) made of the polyacetal resin composition is treated in following steps (1) to (4),

a remaining residue (D) has an ignition loss of 0.2% by weight or more, as treated and calculated in following conditions (a) to (e) with thermogravimetric analysis (TGA) .

Step (1) of loading the polyacetal resin molded article (C) into a mixed solvent of hexafluoroisopropanol (HFIP) and chloroform in 1/1 (volume ratio), and heating the resultant at 60°C for 1 hour for dissolution.

Step (2) of removing a supernatant solution of the resulting solution to afford a residue, loading the resulting residue into a mixed solvent of HFIP and chloroform in 1/1 (volume ratio), and again heating the resultant at 60°C for 30 minutes to remove a supernatant solution.

Step (3) of performing step (2) three times in total, to provide a solvent-containing residue.

Step (4) of subjecting the solvent-containing residue to drying in vacuum at 30°C for 5 hours, to thereby provide the residue (D).

(a) Temperature rise from 50 to 105°C at a rate of 30°C/min.
(b) Retention at 105°C for 30 minutes.
(c) Temperature rise from 105 to 625°C at a rate of 30°C/min.
(d) Retention at 625°C for 30 minutes.
(e) Determination of, as the ignition loss, the value (%) obtained by subtracting the mass after completion of (d) from the mass after completion of (b), dividing the resulting difference by the mass of the residue (D) used for measurement, and multiplying the resulting quotient by 100, and, a remaining residue (D') after the polyacetal resin molded article (C) is dipped in hot water at 80°C for one week and then treated in the steps (1) to (4) has an ignition loss of 0.2% by weight or more.

The content of the glass filler (B) in the present embodiment is 10 parts by mass or more and 100 parts by mass or less with respect to 100 parts by mass of the polyacetal resin (A).

When the content of the glass filler (B) is 10 parts by mass or more, mechanical strength and durability are enhanced.

Moreover, when the content of the glass filler (B) is 100 parts by mass or less, the glass filler can be inhibited from being broken by the contact of the glass filler during molding. Therefore, mechanical strength and creep resistance are enhanced. Furthermore, when the content of the glass filler (B) is 100 parts by mass or less, stable molding can be conducted, poor appearance of the molded article can be suppressed, and high slidability against a metal can be kept.

The lower limit of the content of the glass filler (B) is preferably 12 parts by mass, more preferably 15 parts by mass, further preferably 20 parts by mass, still further preferably 25 parts by mass.

The upper limit of the content of the glass filler (B) is preferably 90 parts by mass, more preferably 80 parts by mass, further preferably 75 parts by mass, still further preferably 70 parts by mass.

The polyacetal resin molded article (C) in the present embodiment can be produced by a known method. Specifically, the molded article can be produced by mixing and melt-kneading raw material components by a single-screw or multi-screw kneading extruder, a roll, a Banbury mixer or the like, and molding them, as described below. In particular, a twin-screw extruder equipped with a pressure reducing apparatus/side feeder instrument can be preferably used.

The method for mixing and melt-kneading raw material components is not particularly limited, and a method well known to those skilled in the art can be used. Specifically, examples include a method including mixing the component (A) and the component (B) in advance by a super mixer, a tumbler, a V-shaped blender, or the like, and melt-kneading the mixture in one portion by a twin-screw extruder, and a method including supplying the component (A) to the main throat of a twin-screw extruder, and adding the component (B) from the midstream of the extruder with melt-kneading.

Although any of these methods can be used, the method including supplying the component (A) to the main throat of a twin-screw extruder, and adding the component (B) from the midstream of the extruder with melt-kneading is preferable for enhancing mechanical physical properties of a molded article of the present embodiment. The optimum conditions vary depending on the size of the extruder, and preferably are thus appropriately adjusted within the scope which can be adjusted by those skilled in the art. More preferably, the screw design of the extruder is also variously adjusted within the scope which can be adjusted by those skilled in the art.

The molding method for providing the molded article of the present embodiment is not particularly limited, and a known molding method can be utilized. Specifically, the molded article can be obtained by any of molding methods such as extrusion molding, injection molding, vacuum molding, blow molding, injection compression molding, decorative molding, double molding, gas-assisted injection molding, foaming injection molding, low-pressure molding, ultrathin injection molding (ultrahigh-speed injection molding), and in-mold composite molding (insert molding and outsert molding).

The residue (D) in the present embodiment means an unsolved content obtained when dissolving the polyacetal resin molded article (C) in a mixed solvent of hexafluoroisopropanol (HFIP) and chloroform in 1/1 (volume ratio). Specifically, 400 mg of the polyacetal resin molded article (C) is loaded into a mixed solvent of 25 mL of HFIP and 25 mL of chloroform, and heated at 60°C for 1 hour. Ninety-five percent or more of the supernatant solution is removed, and the resulting residue is loaded into a mixed solvent of 5 mL of HFIP and 5 mL of chloroform and again heated at 60°C for 30 minutes, to remove 95% or more of the supernatant solution (washing step). The washing step is performed three times in total, to provide a solvent-containing residue. The residue is subjected to drying in vacuum at 30°C for 5 hours, thereby providing the residue (D).

The ignition loss of the residue (D) is calculated by thermogravimetric analysis (TGA). Examples of an apparatus include pyrisl TGA manufactured by PerkinElmer Co., Ltd. The method of calculating the ignition loss is a method including using 30 to 50 mg of a sample to perform heating according to a temperature profile indicated in following conditions (a) to (d).

(a) Temperature rise from 50 to 105°C at a rate of 30°C/min.
(b) Retention at 105°C for 30 minutes.
(c) Temperature rise from 105 to 625°C at a rate of 30°C/min.
(d) Retention at 625°C for 30 minutes.

The ignition loss (% by weight) is determined by subtracting the mass after (d) from the mass after (b), dividing the resulting difference by the mass of the residue (D) used for measurement, and multiplying the resulting quotient by 100.

Herein, the ignition loss of the residue (D) can be obtained as the same result even by use of the pellet of the polyacetal resin (A) and the glass filler (B) after kneading extrusion, and therefore either of the pellet or the molded article can be selected.

One example is specifically described by use of a case of Example 1 described below. The above (a) to (d) are performed using 31.00 mg of the residue (D). The weight here is 30.94 mg after (b) and is 30.84 mg after (d). The ignition loss (% by weight) can be thus determined to be 0.32% by weight according to the following expression.

$$\text{Ignition loss (\% by weight)} = (30.94 - 30.84)/30.94 \times 100 = 0.32$$

The residue (D) of the present embodiment has an ignition loss of 0.2% by weight or more. When the ignition loss of the residue (D) is 0.2% by weight or more, not only high gear durability is achieved, but also good slidability against a metal can be achieved. The ignition loss of the residue (D) is preferably 0.3% by weight or more, more preferably 0.4% by weight or more, further preferably 0.45% by weight or more.

The ignition loss of the residue (D) is a value expressing the close contact of the resin with the glass filler. It easily correlates to durability, in particular, durability under a high torque, and therefore when the ignition loss of the residue (D) is 0.2% by weight or more, the durability under a high torque, of the polyacetal resin composition, can be achieved.

In order that the ignition loss of the residue (D) is 0.2% by weight or more, a method of increasing the amount of a sizing agent of the glass filler (B), to be used, or a method including a step of applying a sizing agent of the glass filler (B), in which cutting to a desired length is made after a step of applying the sizing agent and then drying it, is effective. In addition, a method of setting the terminal OH group concentration of the polyacetal resin (A) to a predetermined value or more, a method of allowing a block component high in affinity with a sizing agent of the glass filler (B) to be

contained in the polyacetal resin (A), or a method of allowing at least one acid component as a sizing agent of the glass filler (B) to be contained is effective.

Furthermore, a method is effective which includes kneading the polyacetal resin (A) and the glass filler (B) for a longer time in an extrusion step of kneading the polyacetal resin (A) and the glass filler (B). A method of charging the glass filler (B) through a portion at a more upstream location of an extruder is also effective. While the glass filler (B) is usually charged through a portion at a more downstream location in extrusion in order to prevent the glass filler (B) from being broken, the glass filler (B) is preferably charged from a portion at a more upstream location in order to enhance the ignition loss of the residue (D).

Such methods can be used singly or in combinations of two or more thereof. It is difficult to make the ignition loss of the residue (D) to be 0.2% by weight or more by a single method, and therefore two or more methods are preferably combined.

Among the above methods, preferable is a method including a step of allowing at least one acid component to be contained as a sizing agent in the glass filler (B) and applying the sizing agent, in which cutting to a desired length is made after a step of applying the sizing agent and then drying it. Among the above methods, preferable is also a method of setting the terminal OH group concentration of the polyacetal resin (A) to a predetermined value or more. Furthermore, more preferable is a combination of a method including a step of allowing at least one acid component to be contained as a sizing agent in the glass filler (B) and applying the sizing agent, in which cutting to a desired length is made after a step of applying the sizing agent and then drying it, and a method of setting the terminal OH group concentration of the polyacetal resin (A) to a predetermined value or more.

For the polyacetal resin molded article (C) of the polyacetal resin composition of the present embodiment, the remaining residue (D') after the polyacetal resin molded article (C) is dipped in hot water at 80°C for one week and thereafter treated in steps (1) to (4) has an ignition loss of 0.2% by weight or more.

The residue (D') means an unmelted content obtained when dipping the polyacetal resin molded article (C) in distilled water and keeping it at 80°C for one week and thereafter dissolving it by use of the mixed solvent of HFIP and chloroform in 1/1 (volume ratio). Specifically, 400 mg of the polyacetal resin molded article (C) is dipped in 50 mL of distilled water, and heated at 80°C for one week. The water is removed, and the resultant is subjected to drying in vacuum at 30°C for 5 hours. Thereafter, the resultant is loaded into a mixed solvent of 25 mL of HFIP and 25 mL of chloroform, and heated at 60°C for 1 hour. Ninety-five percent or more of the supernatant solution is removed, and the resulting residue is loaded into a mixed solvent of 5 mL of HFIP and 5 mL of chloroform and again heated at 60°C for 30 minutes, to remove 95% or more of the supernatant solution (washing step). The washing step is performed three times in total, to provide a solvent-containing residue. The residue is subjected to drying in vacuum at 30°C for 5 hours, thereby providing the residue (D').

The polyacetal resin molded article (C) for providing the residue (D') preferably has a pellet shape, and, when used in the form of an injection molded article, is preferably used after pulverizing to a size of about 1 to 10 mm and removal of any fine particles by a 14-mesh sieve.

The ignition loss of the residue (D') is determined using the same calculation method according to the conditions (a) to (e), as in the ignition loss of the residue (D).

The residue (D') of the present embodiment has an ignition loss of 0.2% by weight or more. Such a range results in not only an enhancement in durability under a low torque and a low load, but also less deterioration in physical properties during coloration to easily impart extension to wide intended use. The ignition loss of the residue (D') is preferably 0.25% by weight or more, more preferably 0.30% by weight or more, further preferably 0.35% by weight or more.

The ignition loss of the residue (D') is a value expressing the quality of the close contact of the resin with the glass filler. It tends to correlate to durability, in particular, durability under a low torque and a low load, and therefore when the ignition loss of the residue (D') is 0.2% by weight or more, the durability under a low torque and a low load is achieved for the polyacetal resin composition.

In order that the ignition loss of the residue (D') is 0.2% by weight or more, not only a method of enhancing the ignition loss of the residue (D), but also a method including an extrusion step of kneading the polyacetal resin (A) and the glass filler (B), in which the polyacetal resin (A) and the glass filler (B) are kneaded in a proper temperature range for a longer time, is effective. In both cases where the temperature during kneading of the polyacetal resin (A) and the glass filler (B) is too low and where the temperature is too high, deterioration in the quality of the close contact of the polyacetal resin (A) with the glass filler (B) is easily caused. Thus, the temperature can be controlled in a proper temperature range to thereby enhance the quality of the close contact. Specific examples of the method of controlling the temperature in a proper temperature range include a method including heating the glass filler (B) in advance and then charging it, and a method including increasing the barrel temperature at a portion through which the glass filler (B) is charged, and such methods can prevent the temperature during kneading from being decreased due to the glass filler (B) low in temperature. As the screw in a kneading zone where the polyacetal resin (A) and the glass filler (B) are kneaded by a twin-screw extruder, a forward-threaded, notched screw (SME manufactured by Coperion GmbH, or 36/36/T manufactured by Toshiba Machine Co., Ltd.) is also effectively used. The "forward-threaded, notched screw" means a screw

in which the flight portion of the forward thread is notched and which has 12 to 20 notches per lead. Such a forward-threaded, notched screw can be used to thereby disperse the glass filler (B) with unnecessary heat generation being suppressed.

Furthermore, examples of the method of making the ignition loss of the residue (D’) to be 0.2% by weight or more include a method including adopting a twin-screw extruder possessing two portions through which raw materials can be charged sideways, to charge the glass filler (B) through a portion at an upstream location and charge a part of the polyacetal resin (A) through the subsequent portion at a downstream location. Although the method is not usually performed because the glass filler (B) is charged and thereafter the polyacetal resin (A) is charged to easily lead to breakage of the glass filler (B), the method is an effective procedure in order to enhance the quality of the close contact of the polyacetal resin (A) with the glass filler (B). Such a procedure enables high share heat generation in kneading of the polyacetal resin (A) and the glass filler (B) to be eliminated by latent heat of fusion of the polyacetal resin (A) charged through the downstream portion, thereby preventing the temperature from being unnecessarily raised.

As the method of making the ignition loss of the residue (D’) to be 0.2% by weight or more, a method is also effective which includes using a high torque extruder to allow for long-term residence in the extruder at a low rotation speed.

These methods may be performed singly or in combinations of two or more. It is difficult to allow the ignition loss of the residue (D’) to be 0.2% by weight or more by a single method, and therefore two or more methods are preferably combined.

<Polyacetal resin (A)>

The polyacetal resin (A) (hereinafter, sometimes designated as "component (A)".) which can be used in the polyacetal resin composition of the present embodiment is described below in detail.

Examples of the polyacetal resin (A) which can be used in the present embodiment include a polyacetal homopolymer, a polyacetal copolymer, a polyacetal copolymer having a cross-linked structure, a block copolymer based on a homopolymer having a block component, and a block copolymer based on a copolymer having a block component.

The polyacetal resin (A) may be used singly or in combinations of two or more.

As the polyacetal resin (A), for example, a combination of those different in molecular weight, a combination of polyacetal copolymers different in the amount of a comonomer, or the like can also be appropriately used.

In the present embodiment, the polyacetal resin (A) preferably includes a block copolymer.

The polyacetal resin (A) of the present embodiment preferably has 2 mmol/kg of a terminal OH group. The upper limit of the terminal OH group is not particularly limited, and is preferably 200 mmol/kg or less, more preferably 100 mmol/kg or less, further preferably 60 mmol/kg or less, still further preferably 15 mmol/kg or less. Such a terminal OH group is generated by using a hydroxyl group-containing substance in a chain transfer agent and a molecular weight modifier during a polymerization reaction. The amount of the hydroxyl group-containing substance can be adjusted to thereby adjust the terminal OH group concentration of the polyacetal resin.

The hydroxyl group-containing substance is not particularly limited, and examples thereof include water, alcohol, polyhydric alcohol, diol, and triol. Examples of such alcohol and polyhydric alcohol include methanol, ethanol, propanol, isopropanol, butanol, pentanol, hexanol, heptanol, octanol, lauryl alcohol, myristyl alcohol, cetyl alcohol, oleyl alcohol, and linolyl alcohol. Examples of such a diol include ethylene glycol, propylene glycol, butylene glycol, and other polydiols.

The terminal OH group of the polyacetal resin can be quantitatively determined by, for example, a method described in Japanese Unexamined Patent Application Publication No. 2001-11143. When a polyacetal resin which cannot be dissolved in hexafluoroisopropanol (HFIP) is adopted, it can be dissolved therein by appropriately mixing with other solvent such as chloroform, and/or heating.

Specific examples of the polyacetal resin (A) include a polyacetal homopolymer substantially consisting of only an oxymethylene unit, which is obtained by homopolymerization of a formaldehyde monomer or a cyclic oligomer of formaldehyde such as a formaldehyde trimer (trioxane) and/or tetramer (tetraoxane), and a polyacetal copolymer which is obtained by copolymerization of a formaldehyde monomer or a cyclic oligomer of formaldehyde such as a formaldehyde trimer (trioxane) and/or tetramer (tetraoxane) with a cyclic ether or a cyclic formal including ethylene oxide, propylene oxide, epichlorohydrin, and a cyclic formal of glycol and/or diglycol, such as 1,3-dioxolane and 1,4-butanediol formal.

For the polyacetal copolymer, a branched polyacetal copolymer obtained by copolymerization of a monomer of formaldehyde and/or a cyclic oligomer of formaldehyde with a monofunctional glycidyl ether, and a polyacetal copolymer having a cross-linked structure, which is obtained by copolymerization with a polyfunctional glycidyl ether, can also be used.

The polyacetal copolymer may be a heterogeneous block copolymer having a block different from the repeat structural unit of polyacetal.

The block copolymer in the present embodiment is preferably an acetal homopolymer or an acetal copolymer (hereinafter, both of them may be collectively designated as a "block copolymer".) having at least a block component represented by any of following formula (1), (2) or (3) .

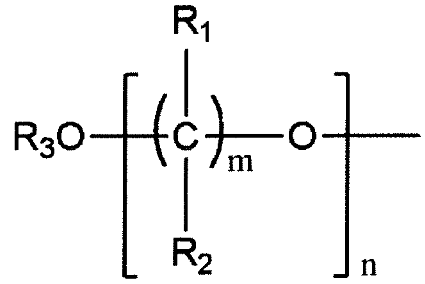

(1)

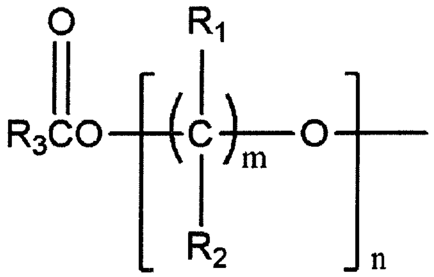

(2)

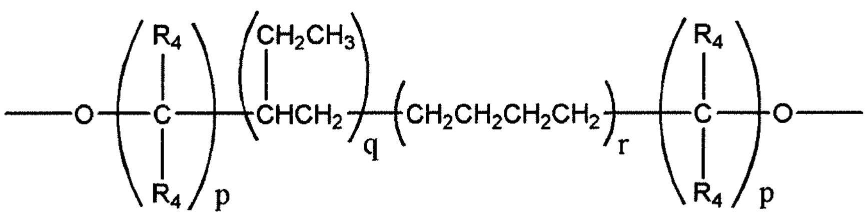

(3)

In formulas (1) and (2), each of $R_1$ and $R_2$ independently represents one selected from a hydrogen atom, an alkyl group, a substituted alkyl group, an aryl group and a substituted aryl group, and a plurality of $R_1$ or $R_2$ moieties may be the same with or different from each other.

$R_3$ represents one selected from the group consisting of an alkyl group, a substituted alkyl group, an aryl group and a substituted aryl group.

m represents an integer of 1 to 6 and preferably represents an integer of 1 to 4.

n represents an integer of 1 to 10000 and preferably represents an integer of 10 to 2500.

The block component represented by formula (1) is a residue obtained by eliminating a hydrogen atom from an alkylene oxide adduct of alcohol, and the block component represented by formula (2) is a residue obtained by eliminating a hydrogen atom from an alkylene oxide adduct of carboxylic acid.

The polyacetal homopolymer having the block component represented by formula (1) or (2) can be prepared by, for example, a method described in Japanese Unexamined Patent Application Publication No. 57-31918.

In formula (3), $R_4$ represents one selected from a hydrogen atom, an alkyl group, a substituted alkyl group, an aryl group and a substituted aryl group, and a plurality of $R_4$ moieties may be the same with or different from each other.

p represents an integer of 2 to 6, and two p moieties may be the same with or different from each other.

q and r each represent a positive number. When the total of q and r is defined as 100% by mol, q accounts for 2 to 100% by mol and r accounts for 0 to 98% by mol, and the $-(CH(CH_2CH_3)CH_2)-$ unit and the $-(CH_2CH_2CH_2CH_2)-$unit are each present at random or as a block.

The block component represented by any of following formula (1), (2) or (3) can be inserted into the polyacetal resin by reacting a block component-constituting compound having a functional group such as a hydroxyl group at both ends or at one end with the terminal portion of polyacetal in the course of polymerization of the polyacetal.

The amount of the insert of the block component represented by formula (1), (2) or (3), in the block copolymer, is not particularly limited, and is, for example, 0.001% by mass or more and 30% by mass or less with respect to 100% by mass of the block copolymer.

The amount of the insert of the block component is preferably 30% by mass or less from the viewpoint of no deterioration in flexural modulus of the molded article, and the amount of the insert of the block component is preferably 0.001% by mass or more from the viewpoint of the tensile strength of the molded article.

The lower limit of the amount of the insert of the block component is more preferably 0.01% by mass, further preferably 0.1% by mass, still further preferably 1% by mass.

The upper limit of the amount of the insert of the block component is more preferably 15% by mass, further preferably 10% by mass, still further preferably 8% by mass.

The molecular weight of the block component in the block copolymer is preferably 10000 or less from the viewpoint of no deterioration in flexural modulus of the molded article, and is more preferably 8000 or less, further preferably 5000 or less.

The lower limit of the molecular weight of the block component is not particularly limited, and is preferably 100 or more from the viewpoint that stable slidability is continuously maintained.

The block component-constituting compound in the block copolymer is not particularly limited, and specific examples thereof suitably include $C_{18}H_{37}O(CH_2CH_2O)_{40}C_{18}H_{37}$, $C_{11}H_{23}CO_2(CH_2CH_2O)_{30}H$, $C_{18}H_{37}O(CH_2CH_2O)_{70}H$, $C_{18}H_{37}O(CH_2CH_2O)_{40}H$, and hydrogenated polybutadiene hydroxyalkylated at both ends.

The block copolymer is preferably an ABA-type block copolymer in terms of its binding pattern.

The ABA-type block copolymer is a block copolymer having the block component represented by formula (3), and specifically means a block copolymer constituted by a polyacetal segment A (hereinafter, designated as A.) and a hydrogenated polybutadiene segment B (hereinafter, designated as B.) hydroxyalkylated at both ends, which are arranged in the order of A-B-A.

The block component represented by formula (1), formula (2) or formula (3) may have an unsaturated bond with an iodine value of 20 g-$I_2$/100 g or less. Such an unsaturated bond is not particularly limited, and examples thereof include a carbon-carbon double bond.

Examples of the polyacetal copolymer having the block component represented by formula (1), formula (2) or formula (3) include a polyacetal block copolymer disclosed in International Publication No. 2001/09213, and such a polyacetal copolymer can be prepared by a method described in the above Publication.

The ABA-type block copolymer can be used as the block copolymer, thereby resulting in a tendency to enhance adhesion with the surface of the glass filler (B). As a result, this tends to be able to increase the tensile stress at break and the flexural modulus of the molded article.

The proportion of the block copolymer in the polyacetal resin (A) is preferably 5% by mass or more and 95% by mass or less with respect to 100% by mass of the whole polyacetal resin (A).

The lower limit of the proportion of the block copolymer is more preferably 10% by mass, further preferably 20% by mass, still further preferably 25% by mass.

The upper limit of the proportion of the block copolymer is more preferably 90% by mass, further preferably 80% by mass, still further preferably 75% by mass.

The proportion of the block copolymer in the resin composition of the present embodiment can be measured by $^1$H-NMR, $^{13}$C-NMR, or the like.

<Glass filler (B)>

The glass filler (B) (hereinafter, sometimes designated as "component (B)".) which can be used in the polyacetal resin composition of the present embodiment is not particularly limited, and examples thereof include glass fiber, glass beads, and glass flake.

Examples of the glass fiber include chopped strand glass fiber, milled glass fiber, and glass fiber roving. Among them, chopped strand glass fiber is preferable from the viewpoints of handleability and the mechanical strength of the molded article.

The glass filler (B) may be used singly or in combinations of two or more.

The glass filler (B) is not particularly limited in terms of the particle size, fiber diameter, fiber length and the like thereof, and may be used in any form, but preferably has a large surface area because the contact area thereof with the polyacetal resin (A) is increased to result in an enhancement in creep resistance of the molded article.

When chopped strand glass fiber is adopted, the average fiber diameter thereof is, for example, 7 μm or more and 15 μm or less.

When the average fiber diameter falls within the above range, the surface of the molded article can be smooth to suppress deterioration in slidability. In addition, the creep resistance of the molded article can be enhanced and also the shaving or the like of the mold surface during molding can be prevented.

The lower limit of the average fiber diameter is preferably 8 μm, more preferably 9 μm.

The upper limit of the average fiber diameter is preferably 14 μm, more preferably 12 μm.

In the present embodiment, the average fiber diameter can be easily measured by burning the molded article at a sufficiently high temperature (400°C or more) to remove a resin component, thereafter observing the resulting ash with a scanning electron microscope and measuring the diameter. In order to eliminate any error, the fiber diameter average value is calculated by measuring the diameters of at least 100 or more chopped strand glass fibers.

The glass fiber may also be used as a blend of two or more glass fibers different in fiber diameter from each other.

The glass filler (B) is with a sizing agent and thus surface-modified, namely, includes a sizing agent. The sizing

agent may also be referred to as a "convergence agent" or a "film-forming agent", and is a substance having a function of modifying the surface of a filler.

3. The sizing agent has at least one acid component.

Examples of the acid component include carboxylic acid components, for example, a homopolymer of a carboxylic acid-containing unsaturated vinyl monomer; a copolymer including a carboxylic acid-containing unsaturated vinyl monomer and an unsaturated vinyl monomer other than the carboxylic acid-containing unsaturated vinyl monomer as constitutional units; and a copolymer including a carboxylic anhydride-containing unsaturated vinyl monomer and an unsaturated vinyl monomer other than the carboxylic anhydride-containing unsaturated vinyl monomer as constitutional units. Among them, a copolymer including a carboxylic acid-containing unsaturated vinyl monomer and an unsaturated vinyl monomer other than the carboxylic acid-containing unsaturated vinyl monomer as constitutional units is more preferably used.

The sizing agent may be used singly or in combinations of two or more.

Specific examples of the carboxylic acid-containing unsaturated vinyl monomer include acrylic acid, methacrylic acid, fumaric acid, itaconic acid and maleic acid, and acrylic acid is preferable.

Acrylic acid can be used as the carboxylic acid-containing unsaturated vinyl monomer, thereby resulting in more enhancements in mechanical strength and durability.

The carboxylic acid-containing unsaturated vinyl monomer may be used singly or in combinations of two or more.

Specific examples of the carboxylic anhydride-containing unsaturated vinyl monomer include maleic anhydride or itaconic anhydride.

The carboxylic anhydride-containing unsaturated vinyl monomer may be used singly or in combinations of two or more.

The acid component is preferably a component including acrylic acid.

In the resin composition of the present embodiment, a component including a resin is easily in close contact with the surface of the glass filler. Therefore, the glass filler is obtained as a residue by dissolving a resin molded article in a mixed solvent of hexafluoroisopropyl alcohol (HFIP) and chloroform in 1/1 (volume ratio), and removing the supernatant liquid. When the glass filler as the residue is analyzed by pyrolysis GC-MS at 600°C, the acid component can be detected.

Even when the pellet of the polyacetal resin (A) and the glass filler (B) after kneading extrusion is used, the acid component can be again detected.

In the present embodiment, the glass filler (B) may also be surface-modified by a coupling agent.

The coupling agent is not particularly limited, and a known coupling agent can be used.

Specific examples of the coupling agent include an organic silane compound, an organic titanate compound and an organic aluminate compound.

The coupling agent may be used singly or in combinations of two or more.

Specific examples of the organic silane compound include vinyltriethoxysilane, vinyl-tris-(2-methoxyethoxy) silane, γ-methacryloxypropylmethoxysilane, γ-aminopropyltrimethoxysilane, γ-aminopropyltriethoxysilane, N-β-(aminoethyl)-γ-aminopropyltrimethoxysilane, β-(3,4-epoxycyclohexyl)ethyltriethoxysilane, γ-glycidoxypropylmethoxysilane and γ-mercaptopropyltrimethoxysilane.

Among them, vinyltriethoxysilane, vinyl-tris-(2-methoxyethoxy) silane, γ-methacryloxypropylmethoxysilane, γ-aminopropyltrimethoxysilane, γ-aminopropyltriethoxysilane and γ-glycidoxypropylmethoxysilane are preferable. Vinyltriethoxysilane, γ-glycidoxypropylmethoxysilane and γ-aminopropyltriethoxysilane are more preferable in terms of economic efficiency and the heat stability of the resin composition.

Specific examples of the organic titanate compound include tetra-i-propyl titanate, tetra-n-butyl titanate, a butyl titanate dimer, tetrastearyl titanate, triethanolamine titanate, titanium acetylacetonate, titanium lactate, octylene glycol titanate, and isopropyl(N-aminoethylaminoethyl)titanate.

Specific examples of the organic aluminate compound include acetoalkoxyaluminum diisopropylate.

The glass filler surface-treated by the coupling agent is used, thereby resulting in a tendency to further enhance the creep resistance of the molded article and also a tendency to further enhance the heat stability of the molded article.

<Polyethylene resin (E) having weight-average molecular weight of 500000 or less>

The resin composition of the present embodiment preferably further includes a polyethylene resin (E) having a weight-average molecular weight of 500000 or less (hereinafter, sometimes designated as "polyethylene resin (E)" or "component (E)".).

The polyethylene resin (E) may be used singly or in combinations of two or more.

When the polyethylene resin (E) has a weight-average molecular weight of 500000 or less, unnecessary share heat generation is suppressed in the step of kneading the polyacetal resin (A) and the glass filler (B), and the quality of the close contact is easily enhanced. Thus, durability under a low load can be enhanced and abrasion after sliding

against a metal can be kept less.

The weight-average molecular weight of the polyethylene resin (E) is preferably 10000 or more and 400000 or less, more preferably 15000 or more and 300000 or less, further preferably 20000 or more and 200000 or less, still further preferably 30000 or more and 150000 or less.

The weight-average molecular weight can be measured by the following method. A sample of the polyacetal resin composition or a part of the molded article is cut out and dipped in hexafluoroisopropanol (hereinafter, abbreviated to HFIP.), and the dissolved polyacetal resin component is filtered off. The polyacetal resin component, if not dissolved in HFIP, may also be here removed by decomposition with hydrochloric acid.

Next, an unmelted residue is dissolved in trichlorobenzene (hereinafter, abbreviated to TCB.) at 140°C, and subjected to filtration to thereby separate the glass filler. The resulting filtrate is subjected to measurement with gel permeation chromatography (hereinafter, abbreviated to GPC.). The column used includes one UT-807 column manufactured by Showa Denko K.K. and two GMHHR-H(S) HT columns manufactured by Tosoh Corp., which are connected in series. TCB is used as a mobile phase, and the sample concentration is set to 20 to 30 mg (polyethylene resin)/20 ml (TCB). The measurement is performed at a column temperature of 140°C and at a flow rate of 1.0 ml/min with a differential refractometer as a detector.

The weight-average molecular weight is calculated with polymethyl methacrylate (hereinafter, abbreviated to PMMA.) as a standard. Here, at least 4 samples having a number-average molecular weight of about 2,000 to about 1,000,000 are used for such PMMA standards.

The content of the polyethylene resin (E) is preferably 0.5 parts by mass or more and 8 parts by mass or less, more preferably 1 part by mass or more and 6 parts by mass or less, further preferably 1.5 parts by mass or less and 5 parts by mass or less, with respect to 100 parts by mass of the polyacetal resin (A).

When the content is 0.5 parts by mass or more, the effect due to compounding of the polyethylene resin (E) is easily achieved.

When the content is 8 parts by mass or less, deterioration in mechanical strength due to the polyethylene resin (E) can be suppressed.

The content of the polyethylene resin (E) can be confirmed by, for example, the following method. The polyacetal resin composition or the molded article is burned at a sufficiently high temperature (400°C or more) to remove the resin component. The content of the glass filler (B) can be determined from the weight of the resulting ash.

Next, the polyacetal resin included in the polyacetal resin composition or the molded article is decomposed with hydrochloric acid, and the compounding ratio of the glass filler (B), previously determined based on the residue, is subtracted to provide the content of the polyethylene resin (E). Herein, the presence or absence of other component may be confirmed by IR or the like and an additional removal operation may be performed depending on the circumstance.

Specific examples of the polyethylene resin (E) which can be used in the present embodiment include ultra low-density polyethylene, low-density polyethylene, high-density polyethylene, and linear low-density polyethylene. Alternatively, an ethylene copolymer containing 5% by mass or less of a comonomer such as propylene, butane or octane may also be used.

Among them, low-density polyethylene is preferable from the viewpoints of temperature control in extrusion and the balance between physical properties.

The polyethylene resin (E) which can be used in the present embodiment preferably includes at least one having a melting point (hereinafter, abbreviated to Tm.) of 115°C or less. More preferably, the Tm is 110°C or less.

When the Tm is 115°C or less, the polyethylene resin (E) is easily eccentrically located on the surface of the molded article during molding, and deterioration in physical properties due to the polyethylene resin (E) can be suppressed.

The Tm of the polyethylene resin (E) is determined using an endothermic peak value obtained by using 4 to 6 mg of a sample of the polyacetal resin composition or a sample cut out from the molded article, and raising the temperature at a rate of 10°C/min in differential scanning calorimetry (DSC). The sample of the polyacetal resin composition, and the sample cut out from the molded article are preferably prepared into a thin section by a press or the like.

<Formaldehyde scavenger (F)>

The polyacetal resin composition of the present embodiment preferably includes a formaldehyde scavenger (F). Specific examples of the formaldehyde scavenger (F) include a compound containing formaldehyde-reactive nitrogen, such as melamine and a polyamide resin, and a polymer thereof, a hydroxide of an alkali metal or an alkaline earth metal, an alkali metal or an alkaline earth metal salt of inorganic acid, alkali metal or an alkaline earth metal salt of a carboxylic acid, and a hydrazide compound.

The compound containing formaldehyde-reactive nitrogen, and the polymer thereof is a polymer or a compound (monomer) having, in its molecule, a nitrogen atom which can react with formaldehyde, and examples thereof include polyamide resins such as nylon 4-6, nylon 6, nylon 6-6, nylon 6-10, nylon 6-12 and nylon 12, and polymers thereof, and

examples of such polymers include nylon 6/6-6/6-10 and nylon 6/6-12.

Examples of the compound containing formaldehyde-reactive nitrogen, and the polymer thereof include acrylamide and a derivative thereof, and a copolymer of acrylamide and a derivative thereof with other vinyl monomer. Examples of the copolymer of acrylamide and a derivative thereof with other vinyl monomer include a poly-β-alanine copolymer obtained by polymerization of acrylamide and a derivative thereof with other vinyl monomer in the presence of a metal alcoholate.

Furthermore, examples of the polymer or compound having formaldehyde-reactive nitrogen include an amide compound, an amino-substituted triazine compound, an adduct of an amino-substituted triazine compound and formaldehyde, a condensate of an amino-substituted triazine compound and formaldehyde, urea, a urea derivative, an imidazole compound and an imide compound.

Specific examples of the amide compound include polyvalent carboxylic acid amide such as isophthalic acid diamide, and anthranilic amide.

Specific examples of the amino-substituted triazine compound include 2,4-diamino-sym-triazine, 2,4,6-triamino-sym-triazine, N-butylmelamine, N-phenylmelamine, N,N-diphenylmelamine, N,N-diallylmelamine, benzoguanamine (2,4-diamino-6-phenyl-sym-triazine), acetoguanamine (2,4-diamino-6-methyl-sym-triazine) and 2,4-diamino-6-butyl-sym-triazine.

Specific examples of the adduct of an amino-substituted triazine compound and formaldehyde include N-methylol melamine, N,N'-dimethylol melamine and N,N',N"-trimethylol melamine.

Specific examples of the condensate of an amino-substituted triazine compound and formaldehyde include a melamine-formaldehyde condensate.

Examples of the urea derivative include N-substituted urea, a urea condensate, ethylene urea, a hydantoin compound and a ureide compound.

Specific examples of the N-substituted urea include methylurea substituted with a substituent such as an alkyl group, alkylenebisurea, and aryl-substituted urea.

Specific examples of the urea condensate include a condensate of urea and formaldehyde.

Specific examples of the hydantoin compound include hydantoin, 5,5-dimethylhydantoin and 5,5-diphenylhydantoin.

Specific examples of the ureide compound include allantoin.

Specific examples of the imide compound include succinimide, glutarimide and phthalimide.

These polymers or compounds having formaldehyde-reactive nitrogen may be used singly or in combinations of two or more.

The amount of the formaldehyde scavenger (F) added is 0.01 to 5 parts by mass with respect to 100 parts by mass of the polyacetal resin (A). The amount of the formaldehyde scavenger (F) added is more preferably 0.01 parts by mass or more and 3 parts by mass in the case where the formaldehyde scavenger (F) is a polymer containing formaldehyde-reactive nitrogen, and the amount is more preferably 0.01 parts by mass or more and 1 part by mass or less in the case where the formaldehyde scavenger (F) is a fatty acid salt of an alkaline earth metal.

The hydrazide compound is not particularly limited, and a known hydrazide compound can be used as long as it has a hydrazine structure (N-N) having a single bond between nitrogen atoms.

Examples of the hydrazide compound include hydrazine; hydrazine hydrate; carboxylic acid monohydrazides such as succinic acid monohydrazide, glutaric acid monohydrazide, adipic acid monohydrazide, pimelic acid monohydrazide, suberic acid monohydrazide, azelaic acid monohydrazide and sebacic acid monohydrazide; saturated aliphatic carboxylic acid dihydrazides such as oxalic acid dihydrazide, malonic acid dihydrazide, succinic acid dihydrazide, glutaric acid dihydrazide, adipic acid dihydrazide, pimelic acid dihydrazide, suberic acid dihydrazide, azelaic acid dihydrazide, sebacic acid dihydrazide and dodecanedioic acid dihydrazide; monoolefinic unsaturated dicarboxylic acid dihydrazides such as maleic acid dihydrazide, fumaric acid dihydrazide and itaconic acid dihydrazide; aromatic carboxylic acid dihydrazides such as isophthalic acid dihydrazide, phthalic acid dihydrazide and 2,6-naphthalenedicarbodihydrazide; pyromellitic acid dihydrazide; trihydrazides such as trimer acid trihydrazide, cyclohexanetricarboxylic acid trihydrazide, benzenetricarboxylic acid trihydrazide, nitrilotriacetic acid trihydrazide and citric acid trihydrazide; tetrahydrazides such as pyromellitic acid tetrahydrazide, naphthoic acid tetrahydrazide, ethylenediamine tetraacetic acid tetrahydrazide and 1,4,5,8-naphthoic acid tetrahydrazide; polyhydrazides such as polyhydrazide obtained by reacting a lower polymer having a carboxylic acid lower alkyl ester group with hydrazine or a hydrazine hydrate; carbonic acid dihydrazide; bissemicarbazide; polyfunctional semicarbazides obtained by excessively reacting N,N-substituted hydrazine such as N,N-dimethylhydrazine and/or any hydrazide exemplified above with diisocyanate such as hexamethylene diisocyanate or isophorone diisocyanate and a polyisocyanate compound derived therefrom; aqueous polyfunctional semicarbazides obtained by excessively reacting any dihydrazide above with an isocyanate group in a reaction product of the polyisocyanate compound and an active hydrogen compound having a hydrophilic group, such as polyether polyols or polyethylene glycol monoalkyl ethers; a mixture of the polyfunctional semicarbazide and the aqueous polyfunctional semicarbazide; and bisacetyl dihydrazone.

The hydrazide compound constituting the polyacetal resin composition of the present embodiment is preferably a carboxylic acid hydrazide, more preferably a saturated aliphatic carboxylic acid hydrazide.

Examples of the saturated aliphatic carboxylic acid hydrazide include carboxylic acid monohydrazides such as succinic acid monohydrazide, glutaric acid monohydrazide, adipic acid monohydrazide, pimelic acid monohydrazide, suberic acid monohydrazide, azelaic acid monohydrazide and sebacic acid monohydrazide; and carboxylic acid dihydrazides such as succinic acid dihydrazide, glutaric acid dihydrazide, adipic acid dihydrazide, pimelic acid dihydrazide, suberic acid dihydrazide, azelaic acid dihydrazide, sebacic acid dihydrazide and dodecanedioic acid dihydrazide.

The content of the hydrazide compound constituting the polyacetal resin composition is 0.01 to 5 parts by mass with respect to 100 parts by mass of the polyacetal homopolymer described above.

If the content is less than 0.01 parts by mass, the amount of formaldehyde released tends to be increased, and if the content is more than 5 parts by mass, a mold deposit tends to be easily generated in a mold in production of an automotive part.

The content of the hydrazide compound is preferably 0.03 to 0.2 parts by mass, more preferably 0.04 to 0.2 parts by mass, further preferably 0.05 to 0.1 parts by mass with respect to 100 parts by mass of the polyacetal resin.

The resulting polyacetal resin composition may also include a reaction product from a carboxylic acid dihydrazide. Examples of such a reaction product include a reaction product of a carboxylic acid dihydrazide with formaldehyde.

<Weathering agent (G)>

The polyacetal resin composition of the present embodiment preferably includes a weathering agent (G). Specific examples of the weathering agent (G) include a hindered amine stabilizer and an ultraviolet absorber.

The polyacetal resin composition of the present embodiment further preferably includes 0.01 to 5 parts by mass of a hindered amine stabilizer and/or 0.01 to 5 parts by mass of an ultraviolet absorber with respect to 100 parts by mass of the polyacetal resin.

(Hindered amine stabilizer)

The polyacetal resin composition of the present embodiment preferably contains 0.01 to 5 parts by mass of a hindered amine stabilizer with respect to 100 parts by mass of the polyacetal resin. The hindered amine stabilizer is not particularly limited, and examples thereof include a piperidine derivative having a sterically hindered group. The piperidine derivative having a sterically hindered group is not particularly limited, and examples thereof include an ester group-containing piperidine derivative, an ether group-containing piperidine derivative and an amide group-containing piperidine derivative. The polyacetal resin composition of the present embodiment includes a specified amount of the hindered amine stabilizer, and thus is excellent, in particular, in fluidity, mechanical properties such as the impact resistance of the molded article, and weather resistance (light stability).

The ester group-containing piperidine derivative is not particularly limited, and examples thereof include aliphatic acyloxypiperidine, aromatic acyloxypiperidine, aliphatic di- or tri-carboxylic acid-bis- or tris-piperidyl ester, and aromatic di-, tri- or tetra-carboxylic acid-bis-, tris- or tetrakis-piperidyl ester. Specific examples of the aliphatic acyloxypiperidine include, but are not particularly limited to, C2-20 aliphatic acyloxy-tetramethylpiperidines such as 4-acetoxy-2,2,6,6-tetramethylpiperidine, 4-stearoyloxy-2,2,6,6-tetramethylpiperidine and 4-acryloyloxy-2,2,6,6-tetramethylpiperidine. Specific examples of the aromatic acyloxypiperidine include, but are not particularly limited to, C7-11 aromatic acyloxytetramethylpiperidines such as 4-benzoyloxy-2,2,6,6-tetramethylpiperidine. Specific examples of the aliphatic di- or tri-carboxylic acid-bis- or tris-piperidyl ester include, but are not particularly limited to, C2-20 aliphatic dicarboxylic acid-bispiperidyl esters such as bis(2,2,6,6-tetramethyl-4-piperidyl) oxalate, bis(2,2,6,6-tetramethyl-4-piperidyl)malonate, bis(1,2,2,6,6-pentamethyl-4-piperidyl)[[3,5-bis(1,1-dimethylethyl)-4-hydroxyphenyl]methyl]butylmalonate, bis(2,2,6,6-tetramethyl-4-piperidyl)adipate, bis(1,2,2,6,6-pentamethyl-4-piperidyl)adipate, bis(1-methyl-2,2,6,6-tetramethyl-4-piperidyl)adipate, bis(2,2,6,6-tetramethyl-4-piperidyl)sebacate, bis(1,2,2,6,6-pentamethyl-4-piperidyl)sebacate, bis(1-octyloxy-2,2,6,6-tetramethyl-4-piperidyl) sebacate and decanedioic acid bis(2,2,6,6-tetramethyl-1-(octyloxy)-4-piperidinyl)ester. Specific examples of the aromatic di-, tri- or tetra-carboxylic acid-bis-, tris- or tetrakis-piperidyl ester include, but are not particularly limited to, aromatic di- or tri-carboxylic acid-bis- or tris-piperidyl esters such as bis(2,2,6,6-tetramethyl-4-piperidyl)terephthalate and tris(2,2,6,6-tetramethyl-4-piperidyl)benzene-1,3,5-tricarboxylate. In addition to the above, examples of the ester group-containing piperidine derivative also include tetrakis(1,2,2,6,6-pentamethyl-4-piperidyl)1,2,3,4-butanetetracarboxylate. Herein, "Ca-b" means that the number of carbon atoms is a to b (a and b represent an integer.), and for example, "C2-20" means that the number of carbon atoms is 2 to 20.

The ether group-containing piperidine derivative is not particularly limited, and examples thereof include C1-10 alkoxypiperidines, C5-8 cycloalkyloxypiperidines, C6-10 aryloxypiperidines, C6-10 aryl-C1-4 alkyloxypiperidines and alkylenedioxybispiperidines. Specific examples of the C1-10 alkoxypiperidine include, but are not particularly limited to,

C1-6 alkoxy-tetramethylpiperidines such as 4-methoxy-2,2,6,6-tetramethylpiperidine. Specific examples of the C5-8 cycloalkyloxypiperidine include, but are not particularly limited to, 4-cyclohexyloxy-2,2,6,6-tetramethylpiperidine. Specific examples of the C6-10 aryloxypiperidine include, but are not particularly limited to, 4-phenoxy-2,2,6,6-tetramethylpiperidine. Specific examples of the C6-10 aryl-C1-4 alkyloxypiperidine include, but are not particularly limited to, 4-benzyloxy-2,2,6,6-tetramethylpiperidine. Specific examples of the alkylenedioxybispiperidine include, but are not particularly limited to, C1-10 alkylenedioxybispiperidines such as 1,2-bis(2,2,6,6-tetramethyl-4-piperidyloxy)ethane.

The amide group-containing piperidine derivative is not particularly limited, and examples thereof include carbamoyloxypiperidines such as 4-(phenylcarbamoyloxy)-2,2,6,6-tetramethylpiperidine, and carbamoyloxy-substituted alkylenedioxy-bispiperidines such as bis(2,2,6,6-tetramethyl-4-piperidyl)hexamethylene-1,6-dicarbamate.

The hindered amine stabilizer is not particularly limited, and examples thereof include high molecular weight piperidine derivative polycondensates such as a succinic acid dimethyl-1-(2-hydroxyethyl)-4-hydroxy-2,2,6,6-tetramethylpiperidine polycondensate, a condensate of 1,2,3,4-butanetetracarboxylic acid, 1,2,2,6,6-pentamethyl-4-piperidinol and tridecyl alcohol, and a condensate of 1,2,3,4-butanetetracarboxylic acid, 1,2,2,6,6-pentamethyl-4-piperidinol and β,β,β',β'-tetramethyl-3,9-(2,4,8,10-tetraoxaspiro[5,5]undecane)-diethanol.

In addition to the above, the hindered amine stabilizer is not particularly limited, and examples thereof include N,N',N'',N''-tetrakis-(4,6-bis-(butyl-(N-methyl-2,2,6,6-tetramethylpiperidin-4-yl)amino)-triazin-2-yl)-4,7-diazadecane-1,10-diamine, 1-[2-{3-(3,5-di-t-butyl-4-hydroxyphenyl)propionyloxy}ethyl]-4-{3-(3,5-di-t-butyl-4-hydroxyphenyl)propionyloxy}-2,2,6,6-tetramethylpiperidine, and a reaction product of N,N'-ethane-1,2-diyl bis(1,3-propanediamine) with a reaction product of cyclohexane with a reaction product of peroxide-treated 4-butylamino-2,2,6,6-tetramethylpiperidine with 2,4,6-trichloro-1,3,5-triazine.

These hindered amine stabilizers are used singly or in combinations of two or more. In the polyacetal resin composition of the present embodiment, the content of the hindered amine stabilizer is preferably 0.01 to 5 parts by mass, more preferably 0.1 to 2 parts by mass, further preferably 0.1 to 1.5 parts by mass with respect to 100 parts by mass of the polyacetal resin. When the content of the hindered amine stabilizer is adjusted to be within the above range, a molded product (for example, automotive parts) obtained from the polyacetal resin composition can retain a further excellent appearance.

(Ultraviolet absorber)

The polyacetal resin composition of the present embodiment preferably contains 0.01 to 5 parts by mass of an ultraviolet absorber with respect to 100 parts by mass of the polyacetal resin. When the polyacetal resin composition contains the specified amount of an ultraviolet absorber, thereby resulting in an enhancement in weather resistance (light stability) of a molded product (for example, automotive parts) obtained from the polyacetal resin composition. The ultraviolet absorber is not particularly limited, and examples thereof include a benzotriazole compound, a benzophenone compound, an oxalanilide compound and a hydroxyphenyl-1,3,5-triazine compound.

The benzotriazole compound is not particularly limited, and examples thereof include benzotriazoles having a hydroxyl group and an alkyl group(preferably C1-6 alkyl group)-substituted aryl group, such as 2-(2'-hydroxy-5'-methylphenyl)benzotriazole, 2-(2'-hydroxy-3',5'-di-t-butylphenyl)benzotriazole, 2-(2'-hydroxy-3',5'-di-t-amylphenyl)benzotriazole and 2-(2'-hydroxy-3',5'-diisoamylphenyl)benzotriazole; and benzotriazoles having a hydroxyl group and an aralkyl group or aryl group-substituted aryl group, such as 2-[2'-hydroxy-3',5'-bis(α,α-dimethylbenzyl)phenyl]benzotriazole; benzotriazoles having a hydroxyl group and an alkoxy group(preferably C1-12 alkoxy group)-substituted aryl group, such as 2-(2'-hydroxy-4'-octoxyphenyl)benzotriazole. The benzotriazole compound preferably includes, among the above, benzotriazoles having a hydroxyl group and a C3-6 alkyl group-substituted C6-10 aryl group (particularly phenyl group), and benzotriazoles having a hydroxyl group and a C6-10 aryl-C1-6 alkyl group (particularly phenyl C1-4 alkyl group)-substituted aryl group.

The benzophenone compound is not particularly limited, and examples thereof include benzophenones having a plurality of hydroxyl groups; and benzophenones having a hydroxyl group and an alkoxy group (preferably C1-16 alkoxy group). Specific examples of the benzophenones having a plurality of hydroxyl groups include, but are not particularly limited to, di-, tri- or tetra-hydroxybenzophenones such as 2,4-dihydroxybenzophenone; and benzophenones having a hydroxyl group and a hydroxyl-substituted aryl or aralkyl group, such as 2-hydroxy-4-benzyloxybenzophenone. Specific examples of the benzophenones having a hydroxyl group and an alkoxy group include, but are not particularly limited to, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone and 2-hydroxy-4-methoxy-5-sulfobenzophenone. Preferable benzophenone compounds are, among the above, benzophenones having a hydroxyl group and a hydroxyl group-substituted C6-10 aryl group or C6-10 aryl-C1-4 alkyl group, in particular, benzophenones having a hydroxyl group and a hydroxyl group-substituted phenyl C1-2 alkyl group.

The oxalanilide compound is not particularly limited, and examples thereof include N-(2-ethylphenyl)-N'-(2-ethoxy-5-t-butylphenyl)oxalic acid diamide and N-(2-ethylphenyl)-N'-(2-ethoxy-phenyl)oxalic acid diamide.

The hydroxyphenyl-1,3,5-triazine compound is not particularly limited, and examples thereof include 2,4-diphenyl-6-(2-hydroxyphenyl)-1,3,5-triazine, 2,4-diphenyl-6-(2,4-dihydroxyphenyl)-1,3,5-triazine, 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-6-(2-hydroxy-4-propoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine and 2,4-diphenyl-6-(2-hydroxy-4-dodecyloxyphenyl)-1,3,5-triazine.

In the polyacetal resin composition of the present embodiment, the content of the ultraviolet absorber is preferably 0.01 to 5 parts by mass, more preferably 0.1 to 2 parts by mass, further preferably 0.1 to 1.5 parts by mass with respect to 100 parts by mass of the polyacetal resin.

Among the above, particularly preferable hindered amine stabilizers are bis(2,2,6,6-tetramethyl-4-piperidyl)sebacate, bis(2,2,6,6-tetramethyl-4-piperidyl)-sebacate, and a condensate of 1,2,3,4-butanetetracarboxylic acid, 1,2,2,6,6-pentamethyl-4-piperidinol and β,β,β',β'-tetramethyl-3,9-(2,4,8,10-tetraoxabis[5,5']undecane)diethanol, and the ultraviolet absorber is more preferably a benzotriazole compound, particularly preferably 2-[2'-hydroxy-3',5'-bis(α,α-dimethylbenzyl)phenyl]benzotriazole.

The polyacetal resin composition of the present embodiment preferably contains the ultraviolet absorber and the hindered amine stabilizer. The ratio of the hindered amine stabilizer and the ultraviolet absorber, the former/the latter (mass ratio), is here preferably 10/90 to 80/20, more preferably 10/90 to 70/30, further preferably in the range from 20/80 to 60/40.

<Stabilizer>

The polyacetal resin composition of the present embodiment may also include various stabilizers commonly used in a polyacetal resin composition as long as the effect of the present invention is not impaired.

The stabilizer is not particularly limited, and specific examples thereof include an antioxidant and a formic acid scavenger.

The stabilizer may be used singly or in combinations of two or more.

The antioxidant is preferably a hindered phenol antioxidant from the viewpoint of an enhancement in heat stability of the molded article. The hindered phenol antioxidant is not particularly limited, and a known hindered phenol antioxidant can be appropriately used.

The amount of the antioxidant added is preferably 0.1 parts by mass or more and 2 parts by mass or less with respect to 100 parts by mass of the polyacetal resin (A) .

Specific examples of the formic acid scavenger include a hydroxide, an inorganic acid salt and a carboxylic acid salt of an alkali metal or an alkaline earth metal.

More specific examples include calcium hydroxide, calcium carbonate, calcium phosphate, calcium silicate, calcium borate, and fatty acid calcium salts (calcium stearate and calcium myristate). Such a fatty acid may also be substituted with a hydroxyl group.

The amount of the formic acid scavenger added, in the case of the polymer containing formaldehyde-reactive nitrogen, being the formaldehyde or formic acid scavenger, is 0.1 parts by mass or more and 3 parts by mass or less, and the amount thereof added, in the case of the fatty acid salt of an alkaline earth metal, is preferably in the range of 0.1 parts by mass or more and 1 part by mass or less, with respect to 100 parts by mass of the polyacetal resin (A).

<Additional components>

The molded article of the polyacetal resin of the present embodiment may also contain various known stabilizers such as a filler (talc, wollastonite, mica, calcium carbonate, and the like) other than the glass filler, a conductivity-imparting agent (carbon black, graphite, carbon nanotube, and the like), a colorant (titanium oxide, zinc oxide, iron oxide, aluminum oxide, an organic dye, and the like), a sliding-imparting agent (various ester compounds, a metal salt of an organic acid, and the like), an ultraviolet absorber, a light stabilizer, and a lubricant, which have been conventionally used in a polyacetal resin composition, as long as the effect of the present invention is not impaired.

The amounts of the additional components added are as follows: the amounts of the filler other than the glass fiber, the conductivity-imparting agent, and the colorant added are preferably 30% by mass or less with respect to 100% by mass of the polyacetal resin, and the amounts of the sliding-imparting agent, the ultraviolet absorber, the light stabilizer, and the lubricant added are preferably 5% by mass or less with respect to 100% by mass of the polyacetal resin.

These additional components may be used singly or in combinations of two or more.

<Method for producing molded article>

The molded article of the present embodiment can be produced by a known method. Specifically, the molded

article can be produced by mixing and melt-kneading raw material components by a single-screw or multi-screw kneading extruder, a roll, a Banbury mixer or the like, and molding them, as described below. In particular, a twin-screw extruder equipped with a pressure reducing apparatus/side feeder instrument can be preferably used.

The method for mixing and melt-kneading raw material components is not particularly limited, and a method well known to those skilled in the art can be used. Specifically, examples include a method including mixing the component (A) and the component (B) in advance by a super mixer, a tumbler, a V-shaped blender, or the like, and melt-kneading the mixture in one portion by a twin-screw extruder, and a method including supplying the component (A) to the main throat of a twin-screw extruder, and adding the component (B) from the midstream of the extruder with melt-kneading. Although any of these methods can be used, the method including supplying the component (A) to the main throat of a twin-screw extruder, and adding the component (B) from the midstream of the extruder with melt-kneading is preferable for enhancing mechanical physical properties of the molded article of the present embodiment. The optimum conditions vary depending on the size of the extruder, and preferably are thus appropriately adjusted within the scope which can be adjusted by those skilled in the art. More preferably, the screw design of the extruder is also variously adjusted within the scope which can be adjusted by those skilled in the art.

When the component (E) is compounded, it can also be added from the midstream of the extruder, and is preferably supplied from the main throat.

Such a production method is adopted to thereby result in the effects of suppressing the temperature rise of the resin and enhancing the quality of the close contact.

The molding method for providing the molded article of the present embodiment is not particularly limited, and a known method can be utilized. Specifically, the molded article can be obtained by any of molding methods such as extrusion molding, injection molding, vacuum molding, blow molding, injection compression molding, decorative molding, double molding, gas-assisted injection molding, foaming injection molding, low-pressure molding, ultrathin injection molding (ultrahigh-speed injection molding), and in-mold composite molding (insert molding and outsert molding).

In the molded article of the present embodiment, the weight reduction rate of a polyacetal resin composition immediately before molding, after heating at 105°C for 3 hours, as compared with the polyacetal resin composition immediately before molding is preferably 0.15% or less. The weight reduction rate is more preferably 0.12% or less, further preferably 0.10% or less. When the weight reduction rate is 0.15% or less, mechanical strength and durability can be further enhanced.

The method for allowing the weight reduction rate to be 0.15% or less can be a method including drying a polyacetal resin composition pellet at 100°C for 2 hours immediately before molding, and thereafter using the resultant, and such a polyacetal resin composition pellet can be prepared by managing the temperature of the strand bath and the dipping length of the strand bath so that the temperature of the strand in extrusion is 100°C or more, thereafter supplying dehumidified air into a product tank, and furthermore using a paper bag equipped with a polyethylene inner package for prevention of moisture absorption.

[Intended use]

The polyacetal resin composition of the present embodiment can be used as a raw material for a molded article which is demanded to have mechanical strength and durability.

The molded article of the present embodiment can be suitably used in an automotive part, and can be suitably used particularly in a part serving as a gear or a pulley which is in contact with other members.

The polyacetal resin can be applied to known intended uses in addition to the above. Specifically, the polyacetal resin can be applied to mechanical elements typified by cams, sliders, levers, arms, clutches, felt clutches, idler gears, rollers, pulleys, key stems, key tops, shutters, reels, shafts, articulations, axes, bearings, door rollers, and guides; outsert-molded resin parts, insert-molded resin parts, chassis, trays, side plates, automotive parts such as parts for doors, typified by door locks, door handles, window regulators, window regulator wire drums, speaker grilles, and glass holders; seat belts and their peripheral components, typified by slip rings for seat belts, and press buttons; elements for combination switches, elements such as switches and clips, elements for fuel, typified by gasoline tanks, fuel pump modules, valves and gasoline tank flanges, elements for office automation equipment, typified by printers and copiers; elements for video equipment, such as digital video cameras and digital cameras; drives for CD, DVD, Blu-ray (R) Disc, and other optical discs; music, video or information equipment typified by navigation systems and mobile personal computers, elements for communication equipment, typified by mobile phones and facsimiles; elements for electrical equipment; and elements for electronic equipment. Other materials include mechanical elements for protruding and retracting pen points and/or pen leads of writing materials; washstands, discharge outlets, and mechanical elements for opening and closing waste plugs; cord stoppers, adjusters and buttons for clothes; sprinkler nozzles and sprinkler hose connection joints; building materials serving as stair handrails and supporting tools of floor materials; and toys, fasteners, chains, conveyors, buckles, sporting goods, automatic vending machines (locking mechanisms for opening/closing portions, and mechanical elements for dispensing commercial goods), furniture, musical instruments, and parts for home facilities.

Examples

Hereinafter, the present embodiment will be specifically described with reference to Examples and Comparative Examples.

Conditions for production and evaluation items of polyacetal resin compositions and molded articles used in Examples and Comparative Examples are as follows.

(1) Extrusion

(Production Method 1)

Used was a co-rotating twin-screw extruder (TEM-48SS extruder manufactured by Toshiba Machine Co., Ltd.) which had a ratio of screw length L to screw diameter D (L/D) of 48 (the number of barrels: 12) and which was equipped with side feeders at the 6th barrel and the 8th barrel and a vacuum vent at the 11th barrel. The 1st barrel was cooled by water, and the temperatures of the 2nd to 5th barrels were set to 210°C and the temperatures of the 6th to 12th barrels were set to 180°C.

The screws used in extrusion were designed as follows. Flight screws (hereinafter, abbreviated to FS.) were positioned at the 1st to 4th barrels, and two kneading disks having a feeding function (hereinafter, abbreviated to RKD.), two kneading disks having no feeding function (hereinafter, abbreviated to NKD.), and one kneading disk having a feeding function in a backward direction (hereinafter, abbreviated to LKD.) were positioned in this order at the 5th barrel. FS was positioned at each of the 6th to 8th barrels, one RKD and one NKD were positioned in this order at the 9th barrel, and FS was positioned at each of the 10th to 11th barrels.

A glass filler was supplied from the side feeder at the 6th barrel, and extrusion was performed at a number of screw rotations of 150 rpm and a total extrusion output of 70 kg/h.

(Production Method 2)

Extrusion was performed in the same conditions as in Production Method 1 except that a glass filler was supplied from the side feeder at the 8th barrel.

(Production Method 3)

Extrusion was performed in the same conditions as in Production Method 1 except that one forward-threaded, notched screw 36/36/T and one NKD were positioned in this order at the 9th barrel and FS was positioned at each of the 10th to 11th barrels.

(Production Method 4)

Extrusion was performed in the same conditions as in Production Method 3 except that the temperature of the 6th barrel was set to 210°C.

(Production Method 5)

Extrusion was performed in the same conditions as in Production Method 4 except that 20% of the polyacetal resin used was supplied from the side feeder at the 8th barrel.

(Production Method 6)

Extrusion was performed in the same conditions as in Production Method 4 except that 35% of the polyacetal resin used was supplied from the side feeder at the 8th barrel.

(Production Method 7)

Extrusion was performed in the same conditions as in Production Method 4 except that 50% of the polyacetal resin used was supplied from the side feeder at the 8th barrel.

(Production Method 8)

Extrusion was performed in the same conditions as in Production Method 4 except that one forward-threaded, notched screw 36/36/T and one NKD were positioned in this order at the 9th barrel and FS was positioned at each of the 10th to 11th barrels.

(Production Method 9)

The same manner was performed in the same conditions as in Production Method 4 except that one forward-threaded, notched screw 36/36/T and one NKD were positioned in this order at the 9th barrel, FS was positioned at each of the 10th to 11th barrels, and 20% of the polyacetal resin used was supplied from the side feeder at the 8th barrel.

(Production Method 10)

The same manner was performed in the same conditions as in Production Method 9 except that the vacuum of the vacuum vent at the 11th barrel was set to -0.08 MPa.

(Production Method 11)

The pellet produced in Production Method 10 was dried at 100°C for 2 hours immediately before molding, and then used.

(Production Method 12)

Used was a co-rotating twin-screw extruder (ZSK45MC18 extruder manufactured by Coperion Co., Ltd.) which had a ratio of screw length L to screw diameter D (L/D) of 52 (the number of barrels: 13) and which was equipped with side feeders at the 6th barrel and the 9th barrel and a vacuum vent at the 11th barrel. The 1st barrel was cooled by water, and the temperatures of the 2nd to 6th barrels were set to 210°C and the temperatures of the 7th to 13th barrels were set to 180°C.

The screws used in extrusion were designed as follows. Flight screws (hereinafter, abbreviated to FS.) were positioned at the 1st to 4th barrels, and two kneading disks having a feeding function (hereinafter, abbreviated to RKD.), two kneading disks having no feeding function (hereinafter, abbreviated to NKD.), and one kneading disk having a feeding function in a backward direction (hereinafter, abbreviated to LKD.) were positioned in this order at the 5th barrel. FS was positioned at each of the 6th to 9th barrels, one SME and one NKD were positioned in this order at the 10th barrel, and FS was positioned at each of the 10th to 11th barrels. From the side feeder at the 8th barrel was supplied 20% of the polyacetal resin used. In addition, the vacuum of the vacuum vent at the 11th barrel was set to -0.08 MPa. Furthermore, the number of screw rotations was decreased to 100 rpm with the total extrusion output being kept at 70 kg/h, thereby performing extrusion where residence was made in the extruder for a longer time and unnecessary generation of heat was suppressed.

(2) Production of molded article

Molding was conducted using an injection molding machine (EC-75NII manufactured by Toshiba Machine Co., Ltd.) at a cylinder set temperature of 205°C in molding conditions of an injection time of 35 seconds and a cooling time of 15 seconds, thereby providing a molded article having a small tensile test piece shape according to ISO 294-2. The mold temperature was set to 90°C. The molded article having a small tensile test piece shape according to ISO 294-2 was used in each of the following measurements (3), (5) and (9).

A molded article having a small tensile test piece shape according to JIS K 7139-5A was also obtained. The mold temperature was set to 90°C. The molded article having a small tensile test piece shape according to JIS K7139-5A was used in the following creep rupture time measurement (6).

Furthermore, injection molding was conducted using an injection molding machine (FANUC Roboshot (R) model i50B, manufactured by Fanuc Corp.) at a cylinder set temperature of 200°C in molding conditions of an injection pressure and pressure keeping of 100 MPa and a mold temperature of 80°C, thereby producing a resin gear (spur gear having a rim having a diameter φ of 50 mm, a module of 1.0, 50 teeth, a tooth width of 8 mm, and a width of 1.5 mm), and the resin gear was used in the following measurement (4).

(3) Tensile stress at break

The tensile stress at break was measured by performing a tensile test using the molded article obtained in (2) above at a pulling rate of 5 mm/min according to ISO527-1.

(4) Gear durability

The durability of the resin gear was measured using a gear durability tester (high-torque gear durability tester NS-1, manufactured by Nakagawa Mfg Co., Ltd.).

A metal gear (diameter φ: 50 mm, module = 1.0, teeth = 50, tooth width: 20 mm) was used as a partner gear, and the time (time: hour) taken for breakage of the resin gear by application of a given operating torque was measured.

The high-load gear durability was determined at an operating torque of 19.1 N•m. The number of rotations was set to 1000 rpm. The test was conducted in a temperature-controlled room of 23°C and 50% humidity. As the time taken for breakage of the resin gear was longer, the gear durability was determined to be better.

On the other hand, the low-load gear durability was determined at an operating torque of 5.0 N•m, and other conditions were the same as in the high-load gear durability.

(5) Depth of abrasion against SUS304 ball and dynamic friction coefficient against SUS304 ball

The molded article obtained in (2) above was used to measure the depth of abrasion against a SUS304 ball and the dynamic friction coefficient against a SUS304 ball by a ball-on-disc reciprocating dynamic frictional abrasion tester (Model AFT-15MS, manufactured by Toyo Seimitsu Kiko Co., Ltd.). A sliding test was performed under the environment of 23°C and a humidity of 50% in conditions of a load of 19.6 N, a linear velocity of 30 mm/ seconds, a reciprocation distance of 20 mm and a number of reciprocations of 5,000. The ball material used was a SUS304 ball (sphere having a diameter of 5 mm). The volume of abrasion (depth of abrasion) after the sliding test was measured by a confocal microscope (OPTELICS (R) H1200, manufactured by Lasertec Corporation). The depth of abrasion against a SUS304 ball was defined as the average of the numerical values obtained by measurement at n = 5. A lower number means a more excellent abrasion resistance.

(6) Physical property retention after coloration

(1) During extrusion, 0.5% by weight of carbon black as a colorant was also compounded to the raw material at the top, and these were kneaded. The tensile test in (3) was performed with respect to each of the sample having carbon black and the sample having no carbon black, and the tensile stress at break of the sample having no carbon black/the tensile stress at break of the sample having carbon black × 100 was defined as the physical property retention (%) after coloration.

(7) Ignition loss of residue (D)

(1) Four hundred mg of the pellet after extrusion was loaded into a mixed solvent of 25 mL of hexafluoroisopropanol (HFIP) and 25 mL of chloroform, and heated at 60°C for 1 hour. Ninety-five percent or more of the supernatant solution was removed. The resulting residue was loaded into a mixed solvent of 5 mL of HFIP and 5 mL of chloroform, and again heated at 60°C for 30 minutes to remove 95% or more of the supernatant solution (washing step). The washing step was performed three times in total, to provide a solvent-containing residue. The residue was subjected to drying in vacuum at 30°C for 5 hours, thereby providing the residue (D).

The ignition loss of the residue (D) was calculated by thermogravimetric analysis (TGA). The conditions were as follows: the apparatus used was pyris1 TGA manufactured by PerkinElmer Co., Ltd.; 30 to 50 mg of the residue (D) was used; and heating was performed according to the temperature profile including following (a) to (d).

(a) Temperature rise from 50 to 105°C at a rate of 30°C/min.
(b) Retention at 105°C for 30 minutes.
(c) Temperature rise from 105 to 625°C at a rate of 30°C/min.
(d) Retention at 625°C for 30 minutes.

The ignition loss was determined by subtracting the mass of (d) from the mass of (b), dividing the resulting difference by the mass of the residue (D) used for measurement, and multiplying the resulting quotient by 100.

(8) Ignition loss of residue (D')

(1) In 50 mL of distilled water was dipped 400 mg of a pellet extruded, and heated at 80°C for one week. The water was removed, and drying was conducted in vacuum at 30°C for 5 hours. Thereafter, the resultant was loaded into a mixed solvent of 25 mL of hexafluoroisopropanol (HFIP) and 25 mL of chloroform, and heated at 60°C for 1 hour. Ninety-five percent or more of the supernatant solution was removed. The resulting residue was loaded into a mixed solvent of 5 mL of HFIP and 5 mL of chloroform, and again heated at 60°C for 30 minutes to remove 95% or more of the supernatant solution (washing step). The washing step was performed three times in total, to provide a solvent-containing residue. The residue was subjected to drying in vacuum at 30°C for 5 hours, thereby providing the residue (D').

The ignition loss of the residue (D') was calculated by thermogravimetric analysis (TGA). The conditions were as follows: the apparatus used was pyris1 TGA manufactured by PerkinElmer Co., Ltd.; 30 to 50 mg of the residue (D') was used; and heating was performed according to the temperature profile including the following.

(a) Temperature rise from 50 to 105°C at a rate of 30°C/min.
(b) Retention at 105°C for 30 minutes.
(c) Temperature rise from 105 to 625°C at a rate of 30°C/min.
(d) Retention at 625°C for 30 minutes.

The ignition loss was determined by subtracting the mass of (d) from the mass of (b), dividing the resulting difference by the mass of the residue (D') used for measurement, and multiplying the resulting quotient by 100.

(9) Strength retention after dipping in hot water

The molded article obtained in (2) above was used, and dipped in distilled water and heated at 80°C for one week. Thereafter, a tensile test was performed according to ISO527-1 at a pulling rate of 5 mm/min to measure the tensile stress at break, and the strength retention based on the tensile stress at break measured in (3) was determined.

Raw material components for polyacetal resin compositions and molded articles used in Examples and Comparative Examples are described below.

The following (A1) to (A5) were used for the polyacetal resin (A).

(A1)

The temperature of a twin-screw self-cleaning-type polymerization machine with a heat medium-permeable jacket (L/D = 8 (L: the distance (m) from the supply port of raw materials to the discharge port thereof in the polymerization machine, D: the inner diameter (m) of the polymerization machine. The same applies hereafter.)) was adjusted to 80°C. To the polymerization machine were added 4 kg/hour of trioxane, 128.3 g/hour (3.9% by mol with respect to 1 mol of trioxane) of 1,3-dioxolane as a comonomer, and methylal as a chain transfer agent in an amount so that the number-average molecular weight of the polyacetal resin was 60,000.

To the polymerization machine were further continuously added boron trifluoride di-n-butyl etherate as a polymerization catalyst in an amount of $1.5 \times 10^{-5}$ mol with respect to 1 mol of trioxane, and polymerization was performed.

The polyacetal copolymer discharged from the polymerization machine was charged into a 1% aqueous solution of triethylamine to deactivate the polymerization catalyst.

The polyacetal copolymer after deactivation of the polymerization catalyst was subjected to filtration by a centrifuge machine, 1 part by mass of an aqueous solution containing choline hydroxide formate (triethyl-2-hydroxyethylammonium formate) as a quaternary ammonium compound was added to 100 parts by mass of the polyacetal copolymer, and the resultant was uniformly mixed and dried at 120°C. The amount of the choline hydroxide formate added here was 20 ppm by mass in terms of the amount of nitrogen. Herein, the amount of the choline hydroxide formate added was adjusted by adjusting the concentration of the choline hydroxide formate in the aqueous solution containing the choline hydroxide formate, added.

The polyacetal copolymer dried was supplied to a two-screw extruder with a vent. To 100 parts by mass of the polyacetal copolymer melted in the extruder was added 0.5 parts by mass of water, and the unstable terminal portion of the polyacetal copolymer was removed by decomposition at an extruder set temperature of 200°C for an extruder residence time of 7 minutes.

To the polyacetal copolymer after decomposition of the unstable terminal portion was added 0.3 parts by mass of triethylene glycol-bis-[3-(3-t-butyl-5-methyl-4-hydroxyphenyl)-propionate] as an antioxidant, and the resultant was extruded as a strand from the extruder die and pelletized with being degassed under a condition of a vacuum of 20 Torr in the extruder with a vent.

Thus, polyacetal resin (A1) was obtained. In addition, the MFR of polyacetal resin (A1) based on JIS K7210

(conditions of 190°C and 2.16 kg) was 10 g/10 minutes, and the terminal OH group concentration was 1.6 mmol/kg.

(A2)

The method in (A1) was performed, provided that ethylene glycol was used as the chain transfer agent and the amount of such ethylene glycol was $1 \times 10^{-3}$ mol with respect to 1 mol of trioxane. Thus, polyacetal resin (A2) was obtained. In addition, the MFR of polyacetal resin (A2) based on JIS K7210 (conditions of 190°C and 2.16 kg) was 10 g/10 minutes, and the terminal OH group concentration was 4.5 mmol/kg.

(A3)

The method in (A1) was performed, provided that ethylene glycol was used as the chain transfer agent and the amount of such ethylene glycol was $3 \times 10^{-3}$ mol with respect to 1 mol of trioxane. Thus, polyacetal resin (A3) was obtained. In addition, the MFR of polyacetal resin (A3) based on JIS K7210 (conditions of 190°C and 2.16 kg) was 35 g/10 minutes, and the terminal OH group concentration was 14.5 mmol/kg.

(A4)

The method in (A1) was performed, provided that ethylene glycol was used as the chain transfer agent and the amount of such ethylene glycol was $1.0 \times 10^{-2}$ mol with respect to 1 mol of trioxane. Thus, polyacetal resin (A5) was obtained. In addition, the MFR of polyacetal resin (A5) based on JIS K7210 (conditions of 190°C and 2.16 kg) was 70 g/10 minutes, and the terminal OH group concentration was 60.0 mmol/kg.

(A5)

A polyacetal block copolymer was prepared as follows.

The temperature of a twin-screw paddle-type continuous polymerization machine with a heat medium-permeable jacket was adjusted to 80°C. To the polymerization machine were continuously supplied 40 mol/hour of trioxane, 2 mol/hour of 1,3-dioxolane as a cyclic formal, boron trifluoride di-n-butyl etherate, as a polymerization catalyst, dissolved in cyclohexane in an amount of $5 \times 10^{-5}$ mol with respect to 1 mol of trioxane, and $1 \times 10^{-3}$ mol of hydrogenated polybutadiene having hydroxyl groups at both ends (number-average molecular weight Mn = 2,330) represented by following formula (5), as a chain transfer agent, with respect to 1 mol of trioxane, and polymerization was performed.

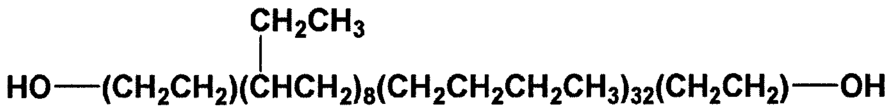 . . . (4)

Next, the polymer discharged from the polymerization machine was charged into a 1% aqueous solution of triethylamine to completely deactivate the polymerization catalyst, and thereafter the polymer was subjected to filtration and washing to provide a crude polyacetal block copolymer.

To 100 parts by mass of the resulting crude polyacetal block copolymer was added 1 part by mass of an aqueous solution containing a quaternary ammonium compound (described in Japanese Patent No. 3087912), and uniformly mixed. The amount of the quaternary ammonium compound added was 20 ppm by mass in terms of the amount of nitrogen. This was supplied to a twin-screw extruder with a vent, and 0.5 parts by mass of water was added to 100 parts by mass of the polyacetal block copolymer melted in the extruder. The unstable terminal portion of the polyacetal block copolymer was removed by decomposition at an extruder set temperature of 200°C for an extruder residence time of 7 minutes.

To the polyacetal block copolymer after decomposition of the unstable terminal portion was added 0.3 parts by mass of triethylene glycol-bis-[3-(3-t-butyl-5-methyl-4-hydroxyphenyl)-propionate] as an antioxidant, and the resultant was extruded as a strand from the extruder die and pelletized with being degassed under a condition of a vacuum of 20 Torr in the extruder with a vent.

The polyacetal block copolymer thus obtained was defined as polyacetal block copolymer (A3). The block copolymer was an ABA-type block copolymer, the MFR based on JIS K7210 (conditions of 190°C and 2.16 kg) was 15 g/10 minutes, and the terminal OH group concentration was 4.3 mmol/kg.

The following (B1) to (B5) were used for the glass filler (B).

(B1) Glass fiber treated with a film-forming agent (containing a copolymer of acrylic acid and methyl acrylate) or the

like described in Production Example 1 of Japanese Patent No. 4060831.
(B2) Glass fiber treated with a polymaleic acid singly, as a film-forming agent, by use of the method described in Production Example 1 of Japanese Patent No. 4060831.
(B3) Glass fiber treated with a film-forming agent (containing no acid) described in Sample No. 1 of Japanese Patent Laid-Open No. 2009-7179.
(B4) Glass fiber treated with a film-forming agent (not using a copolymer of acrylic acid and methyl acrylate, but further using epoxide as a polymer binder) or the like described in Production Example 1 of Japanese Patent No. 4060831.

Herein, each of (B1) to (B4) was dried once after application of the film-forming agent to the glass fiber, and thereafter cut to a desired length.
(B5) Glass fiber treated with a film-forming agent (containing a copolymer of acrylic acid and methyl acrylate) or the like described in Production Example 1 of Japanese Patent No. 4060831, which was cut to a desired length without drying, after application of the film-forming agent to the glass fiber.
The following (E1) to (E4) were used for the polyethylene (E).

(E1) Suntec (R) LD L1850A manufactured by Asahi Kasei Chemicals Corp.
Weight-average molecular weight: 132000, Tm = 107°C, density: 918 kg/$m^3$
(E2) Suntec (R) HD J240 manufactured by Asahi Kasei Chemicals Corp.
Weight-average molecular weight: 73000, Tm = 127°C, density: 966 kg/$m^3$
(E3) Sunfine (R) BM 840 manufactured by Asahi Kasei Chemicals Corp.
Weight-average molecular weight: 324000, Tm = 126°C, density: 931 kg/$m^3$
(E4) Sunfine (R) UH901 manufactured by Asahi Kasei Chemicals Corp.
Molecular weight (viscosity method): 3300000, Tm = 136°C, density: 940 kg/$m^3$

The weight-average molecular weight was measured as described below with GPC by using a solution obtained by dissolving the polyethylene resin (E) in TCB at 140°C. The GPC column used included one UT-807 column manufactured by Showa Denko K.K. and two GMHHR-H(S) HT columns manufactured by Tosoh Corp. which were connected in series. TCB was used as a mobile phase, and the sample concentration was 20 to 30 mg (the polyethylene resin (E))/20 ml (TCB). The measurement was performed at a column temperature of 140°C and at a flow rate of 1.0 ml/min with a differential refractometer as a detector.
The weight-average molecular weight was calculated with PMMA as a standard.
Herein, (E4) had a high molecular weight and contained a component not dissolved in trichlorobenzene, and the molecular weight thereof could not be measured by GPC. Therefore, the molecular weight was measured by a viscosity method according to JIS K7367-3.

[Examples 1 to 32 and Comparative Examples 1 to 13]

Each resin composition was produced by extrusion performed so that the proportion of each component was as described in Table 1 to Table 3. The resulting resin composition was subjected to molding in the above conditions, to produce a molded article. The evaluation results of respective physical properties are shown in Examples 5, 6, 9, 12 and 14 are Table 1 to Table 3. examples not according to the invention.

[Table 1]

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|
| Polyacetal resin | A1 | | | | | | | | | | | | | | | | |
| | A2 | 100 | 100 | | | | | | | 100 | 100 | 100 | 100 | | 100 | 100 | 100 |
| | A3 | | | 100 | 100 | | | | | | | | | | | | |
| | A4 | | | | | 100 | 100 | | | | | | | | | | |
| | A5 | | | | | | | 100 | 100 | | | | | 100 | | | |
| Glass filler | B1 | 33.3 | 60 | 33.3 | 60 | 33.3 | 60 | 33.3 | 60 | | 33.3 | 33.3 | 33.3 | 33.3 | 33.3 | 33.3 | 33.3 |
| | B2 | | | | | | | | | 33.3 | | | | | | | |
| | B3 | | | | | | | | | | | | | | | | |
| | B4 | | | | | | | | | | | | | | | | |
| | B5 | | | | | | | | | | | | | | | | |
| Polyethylene | E1 | | | | | | | | | | 2 | | | 2 | | | |
| | E2 | | | | | | | | | | | 2 | | | | | |
| | E3 | | | | | | | | | | | | 2 | | | | |
| | E4 | | | | | | | | | | | | | | | | |

(continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|
| Production Method | 1 | ○ | ○ | ○ | ○ | ○ | ○ | ○ | ○ | ○ | ○ | ○ | ○ | ○ | | | |
| | 2 | | | | | | | | | | | | | | ○ | | |
| | 3 | | | | | | | | | | | | | | | ○ | |
| | 4 | | | | | | | | | | | | | | | | ○ |
| | 5 | | | | | | | | | | | | | | | | |
| | 6 | | | | | | | | | | | | | | | | |
| | 7 | | | | | | | | | | | | | | | | |
| | 8 | | | | | | | | | | | | | | | | |
| | 9 | | | | | | | | | | | | | | | | |
| | 10 | | | | | | | | | | | | | | | | |
| | 11 | | | | | | | | | | | | | | | | |
| | 12 | | | | | | | | | | | | | | | | |
| Ignition loss of residue (D) | wt% | 0.32 | 0.31 | 0.43 | 0.43 | 0.46 | 0.44 | 0.38 | 0.37 | 0.27 | 0.32 | 0.31 | 0.3 | 0.4 | 0.29 | 0.33 | 0.32 |
| Ignition loss of residue (D') | wt% | 0.22 | 0.21 | 0.23 | 0.22 | 0.18 | 0.18 | 0.23 | 0.22 | 0.18 | 0.24 | 0.23 | 0.19 | 0.24 | 0.19 | 0.25 | 0.24 |
| Weight reduction immediately before molding | wt% | 0.25 | 0.25 | 0.25 | 0.24 | 0.24 | 0.24 | 0.24 | 0.23 | 0.25 | 0.23 | 0.23 | 0.25 | 0.21 | 0.25 | 0.24 | 0.24 |
| Tensile stress at break | MPa | 150 | 176 | 152 | 180 | 155 | 182 | 151 | 180 | 140 | 145 | 144 | 142 | 142 | 147 | 153 | 151 |

(continued)

| | | Example 1 | Example 2 | Example 3 | Example 4 | Example 5 | Example 6 | Example 7 | Example 8 | Example 9 | Example 10 | Example 11 | Example 12 | Example 13 | Example 14 | Example 15 | Example 16 |
|---|---|---|---|---|---|---|---|---|---|---|---|---|---|---|---|---|---|
| High-load gear durability | hour | 13.1 | 13.5 | 14.4 | 14.9 | 12.2 | 12.8 | 15.2 | 16.9 | 10.8 | 15.0 | 14.5 | 13.2 | 17.6 | 11.8 | 13.7 | 13.4 |
| Low-load gear durability | hour | 70 | 67 | 74 | 69 | 79 | 77 | 89 | 86 | 61 | 75 | 73 | 69 | 95 | 59 | 78 | 75 |
| Physical property retention in coloration | % | 95 | 95 | 95 | 95 | 94 | 93 | 97 | 97 | 94 | 96 | 96 | 94 | 95 | 94 | 97 | 95 |
| Strength retention after dipping in hot water | % | 64 | 63 | 66 | 65 | 58 | 54 | 68 | 67 | 54 | 67 | 67 | 59 | 69 | 59 | 72 | 69 |
| Dynamic friction coefficient against SUS304 ball | - | 0.37 | 0.39 | 0.37 | 0.38 | 0.35 | 0.35 | 0.34 | 0.35 | 0.39 | 0.17 | 0.19 | 0.19 | 0.16 | 0.39 | 0.37 | 0.37 |
| Depth of abrasion against SUS304 ball | μm | 20 | 26 | 15 | 22 | 14 | 22 | 16 | 19 | 26 | 5 | 8 | 9 | 4 | 24 | 18 | 20 |

[Table 2]

| | | Example 17 | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|---|---|---|---|---|---|
| Polyacetal resin | A1 | | | | | | | | | | | | | 100 | 100 | 100 | 100 |
| | A2 | 100 | 100 | 100 | 100 | 100 | 100 | 100 | | | | | | | | | |
| | A3 | | | | | | | | | | | | | | | | |
| | A4 | | | | | | | | | | | | | | | | |
| | A5 | | | | | | | | 100 | 100 | 100 | 100 | 100 | | | | |
| Glass filler | B1 | 33.3 | 33.3 | 33.3 | 33.3 | 33.3 | 33.3 | 33.3 | 33.3 | 33.3 | 33.3 | 33.3 | 33.3 | 33.3 | 33.3 | | |
| | B2 | | | | | | | | | | | | | | | | |
| | B3 | | | | | | | | | | | | | | | 33.3 | |
| | B4 | | | | | | | | | | | | | | | | 33.3 |
| | B5 | | | | | | | | | | | | | | | | |
| Polyethylene | E1 | | | | | | | | | | | | 2 | | 2 | | |
| | E2 | | | | | | | | | | | | | | | | |
| | E3 | | | | | | | | | | | | | | | | |
| | E4 | | | | | | | | | | | | | | | | |

(continued)

| | | Example 17 | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|---|---|---|---|---|---|
| Production Method | 1 | | | | | | | | | | | | | | | | |
| | 2 | | | | | | | | | | | | | | | | |
| | 3 | | | | | | | | ○ | | | | | | | | |
| | 4 | | | | | | | | | | | | | | | | |
| | 5 | ○ | | | | | | | | ○ | | | | | | | |
| | 6 | | ○ | | | | | | | | | | | | | | |
| | 7 | | | | | | | | | | | | | | | | |
| | 8 | | | ○ | | | | | | | | | | | | | |
| | 9 | | | | ○ | | | | | | ○ | | | | | | |
| | 10 | | | | | ○ | | | | | | | | | | | |
| | 11 | | | | | | ○ | | | | | ○ | ○ | ○ | ○ | ○ | ○ |
| | 12 | | | | | | | ○ | | | | | | | | | |
| Ignition loss of residue (D) | wt% | 0.34 | 0.33 | 0.33 | 0.34 | 0.35 | 0.37 | 0.36 | 0.38 | 0.4 | 0.41 | 0.42 | 0.41 | 0.26 | 0.26 | 0.22 | 0.22 |
| Ignition loss of residue (D') | wt% | 0.3 | 0.3 | 0.27 | 0.32 | 0.33 | 0.35 | 0.34 | 0.26 | 0.34 | 0.36 | 0.37 | 0.4 | 0.22 | 0.25 | 0.2 | 0.21 |
| Weight reduction immediately before molding | wt% | 0.25 | 0.24 | 0.25 | 0.24 | 0.21 | 0.13 | 0.25 | 0.24 | 0.24 | 0.24 | 0.11 | 0.09 | 0.13 | 0.08 | 0.15 | 0.16 |
| Tensile stress at break | MPa | 147 | 143 | 151 | 148 | 150 | 154 | 153 | ' 152 | 148 | 150 | 155 | 146 | 142 | 140 | 135 | 132 |

(continued)

| | | Example 17 | Example 18 | Example 19 | Example 20 | Example 21 | Example 22 | Example 23 | Example 24 | Example 25 | Example 26 | Example 27 | Example 28 | Example 29 | Example 30 | Example 31 | Example 32 |
|---|---|---|---|---|---|---|---|---|---|---|---|---|---|---|---|---|---|
| High-load gear durability | hour | 14.5 | 140 | 13.9 | 14.9 | 15.0 | 15.6 | 15.3 | 16.0 | 17.1 | 17.6 | 18.1 | 18.5 | 11.7 | 12.1 | 10.2 | 10 |
| Low-load gear durability | hour | 84 | 88 | 77 | 90 | 93 | 98 | 96 | 85 | 90 | 100 | 106 | 113 | 67 | 72 | 65 | 64 |
| Physical property retention in coloration | % | 98 | 98 | 97 | 98 | 98 | 98 | 98 | 97 | 97 | 99 | 99 | 98 | 96 | 96 | 95 | 95 |
| Strength retention after dipping in hot water | % | 74 | 75 | 70 | 76 | 76 | 75 | 77 | 74 | 76 | 79 | 80 | 82 | 64 | 70 | 62 | 61 |
| Dynamic friction coefficient against SUS304 ball | - | 0.36 | 0.36 | 0.37 | 0.36 | 0.36 | 0.36 | 0.36 | 0.33 | 0.32 | 0.32 | 0.32 | 0.15 | 0.37 | 0.17 | 0.39 | 0.38 |
| Depth of abrasion against SUS304 ball | μm | 18 | 17 | 18 | 17 | 18 | 17 | 17 | 16 | 15 | 15 | 15 | 3 | 24 | 7 | 27 | 29 |

[Table 3]

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|---|
| Polyacetal resin | A1 | 100 | | | 100 | | | | | | | | 100 | 100 |
| | A2 | | 100 | 100 | | 100 | 100 | 100 | 100 | 100 | 100 | 100 | | |
| | A3 | | | | | | | | | | | | | |
| | A4 | | | | | | | | | | | | | |
| | A5 | | | | | | | | | | | | | |
| Glass filler | B1 | 33.3 | 5 | 110 | | | | | | | 33.3 | 33.3 | | |
| | B2 | | | | | | | | 33.3 | 33.3 | | | 33.3 | |
| | B3 | | | | 33.3 | 33.3 | | | | | | | | |
| | B4 | | | | | | 33.3 | | | | | | | 33.3 |
| | B5 | | | | | | | 33.3 | | | | | | |
| Polyethylene | E1 | | | | | | | | | | | 2 | | |
| | E2 | | | | | | | | | | | | | |
| | E3 | | | | | | | | | | | | | |
| | E4 | | | | | | | | | 2 | | | | |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|---|
| Production Method | 1 | ○ | ○ | ○ | ○ | ○ | ○ | ○ | | | | | | |
| | 2 | | | | | | | | ○ | ○ | | | ○ | ○ |
| | 3 | | | | | | | | | | | | | |
| | 4 | | | | | | | | | | | | | |
| | 5 | | | | | | | | | | | | | |
| | 6 | | | | | | | | | | | | | |
| | 7 | | | | | | | | | | ○ | ○ | | |
| | 8 | | | | | | | | | | | | | |
| | 9 | | | | | | | | | | | | | |
| | 10 | | | | | | | | | | | | | |
| | 11 | | | | | | | | | | | | | |
| | 12 | | | | | | | | | | | | | |
| Ignition loss of residue (D) | wt% | 0.18 | 0.33 | 0.25 | 0.12 | 0.13 | 0.19 | 0.19 | 0.18 | 0.18 | 0.19 | 0.18 | 0.17 | 0.16 |
| Ignition loss of residue (D') | wt% | 0.16 | 0.24 | 0.21 | 0.1 | 0.12 | 0.16 | 0.18 | 0.15 | 0.17 | 0.14 | 0.12 | 0.13 | 0.11 |
| Weight reduction immediately before molding | wt% | 0.25 | 0.16 | 0.27 | 0.25 | 0.25 | 0.27 | 0.28 | 0.27 | 0.25 | 0.24 | 0.21 | 0.27 | 0.27 |
| Tensile stress at break | MPa | 136 | 85 | 187 | 127 | 129 | 120 | 138 | 135 | 130 | 127 | 123 | 132 | 123 |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 | Comparative Example 12 | Comparative Example 13 |
|---|---|---|---|---|---|---|---|---|---|---|---|---|---|---|
| Gear durability | hour | 9.0 | 4.9 | 8.9 | 5.5 | 6.1 | 7.9 | 9.5 | 9.3 | 9.8 | 11.6 | 12.1 | 9.1 | 6.4 |
| Low-load gear durability | hour | 58 | 38 | 59 | 50 | 51 | 48 | 65 | 54 | 58 | 58 | 62 | 51 | 45 |
| Physical property retention in coloration | % | 94 | 99 | 94 | 93 | 93 | 94 | 94 | 94 | 94 | 94 | 95 | 94 | 94 |
| Strength retention after dipping in hot water | % | 54 | 84 | 32 | 48 | 50 | 53 | 55 | 59 | 60 | 68 | 69 | 56 | 52 |
| Dynamic friction coefficient against SUS304 ball | - | 0.39 | 0.35 | 0.51 | 0.46 | 0.45 | 0.42 | 0.39 | 0.40 | 0.24 | 0.37 | 0.18 | 0.41 | 0.42 |
| Depth of abrasion against SUS304 ball | μm | 28 | 14 | 34 | 46 | 42 | 38 | 31 | 29 | 16 | 21 | 6 | 30 | 40 |

It was found that Examples 1 to 32 were high in tensile stress at break and also very excellent in high-load gear durability. Furthermore, such a composition in each of Examples 1 to 32 was found to provide a molded article also excellent in slidability against a metal (SUS304).

It was found that Examples 1 to 6, as compared with Comparative Example 1, had an ignition loss of the residue (D) of 0.20% by weight or more and therefore were excellent in not only tensile stress at break, but also high-load gear durability and slidability against a metal (SUS) .

Examples 1 and 9, as compared with Comparative Examples 5 and 6, were increased in the ignition loss of the residue (D) because of containing polyacrylic acid or polymaleic acid being an acid component as a sizing agent of the glass filler (B), exerted the best effect particularly in the case of containing polyacrylic acid, and were observed to be higher in performance due to an increase in the ignition loss of the residue (D).

It was found that in Example 1, as compared with Comparative Example 7, the step of treatment with a sizing agent of the glass filler (B) had an effect on the ignition loss of the residue (D), and as the ignition loss of the residue (D) was higher, higher performance was observed.

Examples 1, 2, 7 and 8, as compared with one another, even when having substantially the same terminal OH group concentration of the polyacetal resin (A), were increased in the ignition loss of the residue (D) and were observed to be higher in performance because a specified block component was contained in the polyacetal resin.

Examples 1 and 2, as compared with Comparative Examples 2 and 3, were enhanced in the tensile stress at break, while sliding against a metal was deteriorated as the amount of the glass filler (B) was larger. On the other hand, the best effect of enhancing the gear durability was achieved by a proper amount of the glass filler (B).

As indicated in Examples 15 to 32, also when extrusion was made according to Production Methods 3 to 12, the tensile stress at break was high and the high-load gear durability and the low-load gear durability were excellent.

As described above, it was found that the components (A), (B) and (E), and various Production Methods were combined to thereby result in an enhancement in the ignition loss of the residue (D), thereby imparting enhanced performance.

Industrial Applicability

The polyacetal resin composition and the molded article of the present embodiment have industrial applicability in various fields where a polyacetal resin is suitably used, in particular, in the automotive mechanical element field where durability and slidability are demanded.

**Claims**

**1.** A polyacetal resin composition comprising 100 parts by mass of a polyacetal resin (A) and 10 parts by mass or more and 100 parts by mass or less of a glass filler (B), wherein

the polyacetal resin composition comprises at least one acid component as a sizing agent of the glass filler (B), when a polyacetal resin molded article (C) made of the polyacetal resin composition is treated in following steps (1) to (4),
a remaining residue (D) has an ignition loss of 0.2% by weight or more, as treated and calculated in following conditions (a) to (e) with thermogravimetric analysis (TGA) :

step (1) of loading the polyacetal resin molded article (C) into a mixed solvent of hexafluoroisopropanol (HFIP) and chloroform in 1/1 (volume ratio), and heating the resultant at 60°C for 1 hour for dissolution;
step (2) of removing a supernatant solution of the resulting solution to afford a residue, loading the resulting residue into a mixed solvent of HFIP and chloroform in 1/1 (volume ratio), and again heating the resultant at 60°C for 30 minutes to remove a supernatant solution;
step (3) of performing step (2) three times in total, to provide a solvent-containing residue; and
step (4) of subjecting the solvent-containing residue to drying in vacuum at 30°C for 5 hours, to thereby provide the residue (D); and

(a) temperature rise from 50 to 105°C at a rate of 30°C/min;
(b) retention at 105°C for 30 minutes;
(c) temperature rise from 105 to 625°C at a rate of 30°C/min;
(d) retention at 625°C for 30 minutes; and
(e) determination of, as an ignition loss, a value (% by weight) obtained by subtracting a mass after completion of (d) from a mass after completion of (b), dividing the resulting difference by a mass of the

residue (D) used for measurement, and multiplying the resulting quotient by 100, and,

a remaining residue (D') after the polyacetal resin molded article (C) is dipped in hot water at 80°C for one week and then treated in the steps (1) to (4) has an ignition loss of 0.2% by weight or more.

2. The polyacetal resin composition according to claim 1, wherein the residue (D) has an ignition loss of 0.3% by weight or more.

3. The polyacetal resin composition according to claim 1, wherein the acid component is a carboxylic acid component.

4. The polyacetal resin composition according to claim 1 or 3, wherein the acid component is a component comprising acrylic acid.

5. The polyacetal resin composition according to any one of claims 1 to 4, wherein the polyacetal resin (A) has a terminal OH group concentration of 2 mmol/kg or more, wherein terminal OH group concentration is determined after reacting a trimethylsilyl group with the terminal OH group of the polyacetal resin (A) based on the ratio of NMR signal area of the trimethylsilyl group signal at about 0.20 ppm to the NMR signal area of the oxymethylene signal at about 0.23 ppm.

6. The polyacetal resin composition according to any one of claims 1 to 5, wherein the polyacetal resin (A) has a terminal OH group concentration of 2 mmol/kg or more and 100 mmol/kg or less, wherein terminal OH group concentration is determined after reacting a trimethylsilyl group with the terminal OH group of the polyacetal resin (A) based on the ratio of NMR signal area of the trimethylsilyl group signal at about 0.20 ppm to the NMR signal area of the oxymethylene signal at about 0.23 ppm.

7. The polyacetal resin composition according to any one of claims 1 to 6, wherein the polyacetal resin (A) has a terminal OH group concentration of 2 mmol/kg or more and 15 mmol/kg or lesss, wherein terminal OH group concentration is determined after reacting a trimethylsilyl group with the terminal OH group of the polyacetal resin (A) based on the ratio of NMR signal area of the trimethylsilyl group signal at about 0.20 ppm to the NMR signal area of the oxymethylene signal at about 0.23 ppm.

8. The polyacetal resin composition according to any one of claims 1 to 7, wherein the polyacetal resin (A) comprises a block component.

9. The polyacetal resin composition according to claim 8, wherein the block component is a hydrogenated polybutadiene component.

10. The polyacetal resin composition according to any one of claims 1 to 9, further comprising polyethylene (E) having a weight-average molecular weight of 500000 or less, wherein the weight-average molecular weight is determined by gel permeation chromatography using at least 4 polymethyl methacrylate samples having a number-average molecular weight of about 2,000 to about 1,000,000 as a standard.

11. The polyacetal resin composition according to claim 10, wherein the polyethylene (E) having a weight-average molecular weight of 500000 or less has a melting point of 115°C or less.

12. A molded article comprising the polyacetal resin composition according to any one of claims 1 to 11.

13. The molded article according to claim 12, wherein a weight reduction rate of a polyacetal resin composition immediately before molding, after heating at 105°C for 3 hours, as compared with the polyacetal resin composition immediately before molding is 0.15% or less.

## Patentansprüche

1. Polyacetalharzzusammensetzung, umfassend 100 Masseteile eines Polyacetalharzes (A) und 10 Masseteile oder mehr und 100 Masseteile oder weniger eines Glasfüllstoffs (B), worin

die Polyacetalharzzusammensetzung mindestens eine Säurekomponente als Leimungsmittel des Glasfüllstoffs

(B) umfasst,
wenn ein Polyacetalharzformgegenstand (C) aus der Polyacetalharzzusammensetzung in den folgenden Schritten (1) bis (4) behandelt wird,
ein verbleibender Rückstand (D) einen Glühverlust, der unter den folgenden Bedingungen (a) bis (e) mit thermogravimetrischer Analyse (TGA) behandelt und berechnet wird, von 0,2 Gew.-% oder mehr aufweist:

Schritt (1) des Einbringens des Polyacetalharzformgegenstands (C) in ein gemischtes Lösungsmittel aus Hexafluorisopropanol (HFIP) und Chloroform im Verhältnis 1/1 (Volumenverhältnis) und des Erwärmens des resultierenden Produkts für 1 Stunde auf 60°C zur Auflösung;
Schritt (2) des Entfernens einer überstehenden Lösung der resultierenden Lösung, so dass sich ein Rückstand ergibt, des Einbringens des resultierenden Rückstands in ein gemischtes Lösungsmittel aus HFIP und Chloroform im Verhältnis 1/1 (Volumenverhältnis) und des erneuten Erwärmens des resultierenden Produkts auf 60°C für 30 Minuten, so dass eine überstehende Lösung entfernt wird;
Schritt (3) des insgesamt dreimaligen Durchführens von Schritt (2), so dass ein lösungsmittelhaltiger Rückstand bereitgestellt wird; und
Schritt (4) des Trocknens des lösungsmittelhaltigen Rückstands im Vakuum bei 30°C für 5 Stunden, so dass dadurch der Rückstand (D) bereitgestellt wird; und

(a) Temperaturerhöhung von 50 auf 150°C bei einer Rate von 30°C/min;
(b) Halten bei 105°C für 30 Minuten;
(c) Temperaturerhöhung von 105 auf 625°C bei einer Rate von 30°C/min;
(d) Halten bei 625°C für 30 Minuten; und
(e) Bestimmung eines Wertes (Gew.-%) als Glühverlust, der durch Subtrahieren einer Masse nach Abschluss von (d) von einer Masse nach Abschluss von (b), Dividieren der resultierenden Differenz durch eine Masse des zur Messung verwendeten Rückstands (D) und Multiplizieren des resultierenden Quotienten mit 100 erhalten wird und

ein verbleibender Rückstand (D'), nachdem der Polyacetalharzformgegenstand (C) eine Woche lang in heißes Wasser bei 80 °C getaucht und dann in den Schritten (1) bis (4) behandelt wird, einen Glühverlust von 0,2 Gew.-% oder mehr aufweist.

2. Polyacetalharzzusammensetzung gemäß Anspruch 1, worin der Rückstand (D) einen Glühverlust von 0,3 Gew.-% oder mehr aufweist.

3. Polyacetalharzzusammensetzung gemäß Anspruch 1, worin die Säurekomponente eine Carbonsäurekomponente ist.

4. Polyacetalharzzusammensetzung gemäß Anspruch 1 oder 3, worin die Säurekomponente eine Komponente ist, die Acrylsäure umfasst.

5. Polyacetalharzzusammensetzung gemäß einem der Ansprüche 1 bis 4, worin das Polyacetalharz (A) eine terminale OH-Gruppenkonzentration von 2 mmol/kg oder mehr aufweist, worin die terminale OH-Gruppenkonzentration nach Reagieren einer Trimethylsilylgruppe mit der terminalen OH-Gruppe des Polyacetalharzes (A) basierend auf dem Verhältnis des NMR-Signalbereichs des Trimethylsilylgruppensignals bei etwa 0,20 ppm zu dem NMR-Signalbereich des Oxymethylensignals bei etwa 0,23 ppm bestimmt wird.

6. Polyacetalharzzusammensetzung gemäß einem der Ansprüche 1 bis 5, worin das Polyacetalharz (A) eine terminale OH-Gruppenkonzentration von 2 mmol/kg oder mehr und 100 mmol/kg oder weniger aufweist, worin die terminale OH-Gruppenkonzentration nach Reagieren einer Trimethylsilylgruppe mit der terminalen OH-Gruppe des Polyacetalharzes (A) basierend auf dem Verhältnis des NMR-Signalbereichs des Trimethylsilylgruppensignals bei etwa 0,20 ppm zu dem NMR-Signalbereich des Oxymethylensignals bei etwa 0,23 ppm bestimmt wird.

7. Polyacetalharzzusammensetzung gemäß einem der Ansprüche 1 bis 6, worin das Polyacetalharz (A) eine terminale OH-Gruppenkonzentration von 2 mmol/kg oder mehr und 15 mmol/kg oder weniger aufweist, worin die terminale OH-Gruppenkonzentration nach Reagieren einer Trimethylsilylgruppe mit der terminalen OH-Gruppe des Polyacetalharzes (A) basierend auf dem Verhältnis des NMR-Signalbereichs des Trimethylsilylgruppensignals bei etwa 0,20 ppm zu dem NMR-Signalbereich des Oxymethylensignals bei etwa 0,23 ppm bestimmt wird.

8. Polyacetalharzzusammensetzung gemäß einem der Ansprüche 1 bis 7, worin das Polyacetalharz (A) eine Blockkomponente umfasst.

9. Polyacetalharzzusammensetzung gemäß Anspruch 8, worin die Blockkomponente eine hydrierte Polybutadienkomponente ist.

10. Polyacetalharzzusammensetzung gemäß einem der Ansprüche 1 bis 9, ferner umfassend Polyethylen (E) mit einem gewichtsmittleren Molekulargewicht von 500000 oder weniger, worin das gewichtsmittlere Molekulargewicht durch Gelpermeationschromatographie unter Verwendung von mindestens 4 Polymethylmethacrylatproben mit einem zahlenmittleren Molekulargewicht von etwa 2.000 bis etwa 1.000.000 als Standard bestimmt wird.

11. Polyacetalharzzusammensetzung gemäß Anspruch 10, worin das Polyethylen (E) mit einem gewichtsmittleren Molekulargewicht von 500000 oder weniger einen Schmelzpunkt von 115°C oder weniger aufweist.

12. Formgegenstand, umfassend die Polyacetalharzzusammensetzung gemäß einem der Ansprüche 1 bis 11.

13. Formgegenstand gemäß Anspruch 12, worin eine Gewichtsreduktionsrate einer Polyacetalharzzusammensetzung unmittelbar vor dem Formen, nach Erwärmen auf 105°C für 3 Stunden, im Vergleich zur Polyacetalharzzusammensetzung unmittelbar vor dem Formen 0,15 % oder weniger beträgt.

**Revendications**

1. Composition de résine de polyacétal comprenant 100 parties en masse d'une résine de polyacétal (A) et 10 parties en masse ou plus et 100 parties en masse ou moins d'une charge de verre (B), dans laquelle

   la composition de résine de polyacétal comprend au moins un composant acide en tant qu'agent de collage de la charge de verre (B),
   lorsqu'un article moulé (C) en résine de polyacétal fait de la composition de résine de polyacétal est traité dans les étapes (1) à (4) suivantes,
   un résidu (D) restant présente une perte au feu de 0,2 % en poids ou plus, tel que traité et calculé dans les conditions (a) à (e) suivantes avec une analyse thermogravimétrique (TGA) :

      étape (1) de chargement de l'article moulé (C) en résine de polyacétal dans un solvant mixte d'hexafluoroisopropanol (HFIP) et de chloroforme en 1/1 (rapport volumique), et chauffage du produit résultant à 60 °C pendant 1 heure pour la dissolution ;
      étape (2) d'élimination d'une solution surnageante de la solution résultante pour obtenir un résidu, de chargement du résidu résultant dans un solvant mixte d'HFIP et de chloroforme en 1/1 (rapport volumique), et à nouveau de chauffage du produit résultant à 60 °C pendant 30 minutes pour éliminer une solution surnageante ;
      étape (3) de mise en oeuvre de l'étape (2) trois fois au total, pour fournir un résidu contenant un solvant ; et
      étape (4) de soumission du résidu contenant un solvant à un séchage sous vide à 30 °C pendant 5 heures, pour ainsi fournir le résidu (D) ; et

         (a) élévation de la température de 50 à 105 °C à une vitesse de 30 °C/min ;
         (b) maintien à 105 °C pendant 30 minutes ;
         (c) élévation de la température de 105 à 625 °C à une vitesse de 30 °C/min ;
         (d) maintien à 625 °C pendant 30 minutes ; et
         (e) détermination, en tant que perte au feu, d'une valeur (% en poids) obtenue par soustraction d'une masse après achèvement de (d) à une masse après achèvement de (b), division de la différence résultante par une masse du résidu (D) utilisée pour la mesure, et multiplication du quotient résultant par 100, et,

      un résidu (D') restant après que l'article moulé (C) en résine de polyacétal est plongé dans de l'eau chaude à 80 °C pendant une semaine et ensuite traité dans les étapes (1) à (4) présente une perte au feu de 0,2 % en poids ou plus.

2. Composition de résine de polyacétal selon la revendication 1, dans laquelle le résidu (D) présente une perte au feu

de 0,3 % en poids ou plus.

**3.** Composition de résine de polyacétal selon la revendication 1, dans laquelle le composant acide est un composant acide carboxylique.

**4.** Composition de résine de polyacétal selon la revendication 1 ou la revendication 3, dans laquelle le composant acide est un composant comprenant de l'acide acrylique.

**5.** Composition de résine de polyacétal selon l'une quelconque des revendications 1 à 4, dans laquelle la résine de polyacétal (A) présente une concentration en groupes OH terminaux de 2 mmol/kg ou plus, dans laquelle la concentration en groupes OH terminaux est déterminée après réaction d'un groupe triméthylsilyle avec le groupe OH terminal de la résine de polyacétal (A) sur base du rapport de l'aire de signal RMN du signal de groupe triméthylsilyle à environ 0,20 ppm à l'aire de signal RMN du signal d'oxyméthylène à environ 0,23 ppm.

**6.** Composition de résine de polyacétal selon l'une quelconque des revendications 1 à 5, dans laquelle la résine de polyacétal (A) présente une concentration en groupes OH terminaux de 2 mmol/kg ou plus et de 100 mmol/kg ou moins, dans laquelle la concentration en groupes OH terminaux est déterminée après réaction d'un groupe triméthylsilyle avec le groupe OH terminal de la résine de polyacétal (A) sur base du rapport de l'aire de signal RMN du signal de groupe triméthylsilyle à environ 0,20 ppm à l'aire de signal RMN du signal d'oxyméthylène à environ 0,23 ppm.

**7.** Composition de résine de polyacétal selon l'une quelconque des revendications 1 à 6, dans laquelle la résine de polyacétal (A) présente une concentration en groupes OH terminaux de 2 mmol/kg ou plus et de 15 mmol/kg ou moins, dans laquelle la concentration en groupes OH terminaux est déterminée après réaction d'un groupe triméthylsilyle avec le groupe OH terminal de la résine de polyacétal (A) sur base du rapport de l'aire de signal RMN du signal de groupe triméthylsilyle à environ 0,20 ppm à l'aire de signal RMN du signal d'oxyméthylène à environ 0,23 ppm.

**8.** Composition de résine de polyacétal selon l'une quelconque des revendications 1 à 7, dans laquelle la résine de polyacétal (A) comprend un composant séquence.

**9.** Composition de résine de polyacétal selon la revendication 8, dans laquelle le composant séquencé est un composant polybutadiène hydrogéné.

**10.** Composition de résine de polyacétal selon l'une quelconque des revendications 1 à 9, comprenant en outre du polyéthylène (E) présentant un poids moléculaire moyen en poids de 500 000 ou moins, dans laquelle le poids moléculaire moyen en poids est déterminé par chromatographie de perméation sur gel en utilisant au moins 4 échantillons de méthacrylate de polyméthyle présentant un poids moléculaire moyen en nombre d'environ 2 000 à environ 1 000 000 en tant qu'étalon.

**11.** Composition de résine de polyacétal selon la revendication 10, dans laquelle le polyéthylène (E) présentant un poids moléculaire moyen en poids de 500 000 ou moins présente un point de fusion de 115 °C ou moins.

**12.** Article moulé comprenant la composition de résine de polyacétal selon l'une quelconque des revendications 1 à 11.

**13.** Article moulé selon la revendication 12, dans laquelle un taux de réduction de poids d'une composition de résine de polyacétal immédiatement avant le moulage, après chauffage à 105 °C pendant 3 heures, comparativement à la composition de résine de polyacétal immédiatement avant le moulage, est de 0,15 % ou moins.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2004359791 A
- JP 2013539810 W
- JP 2001011143 A
- JP 57031918 A
- WO 200109213 A
- JP 3087912 B
- JP 4060831 B
- JP 2009007179 A